# EUROPEAN PATENT SPECIFICATION

(11) **EP 2 698 655 B1**
(45) Date of publication and mention of the grant of the patent: **07.06.2017**
(21) Application number: 12771866.6
(22) Date of filing: 09.04.2012
(51) Int. Cl.: G02B 5/28, G02B 5/26

(54) **OPTICAL MULTILAYERED FILM BANDPASS FILTER**
OPTISCHER MEHRSCHICHTFOLIEN-BANDPASSFILTER
FILTRE PASSE-BANDE À FILM MULTICOUCHE OPTIQUE

(30) Priority: 15.04.2011 JP 2011091084
(43) Date of publication of application: 19.02.2014
(73) Proprietor: OLYMPUS CORPORATION, Hachioji-shi Tokyo 192-8507 (JP)
(72) Inventor: OGAWA Koichi, Tokyo 192-8507 (JP)
(74) Representative: Kuhnen & Wacker
(86) International application number: PCT/JP2012/059697
(87) International publication number: WO 2012/141138

(56) References cited:
- EP-A2- 0 041 358
- WO-A1-2010/025536
- JP-A- 7 104 122
- JP-A- H07 104 122
- JP-A- 2004 138 798
- JP-A- 2006 023 602
- JP-A- 2006 023 602
- JP-A- 2006 201 411
- JP-A- 2011 242 437
- US-A1- 2009 116 114

## Description

### TECHNICAL FIELD

The present invention relates to an optical multilayer band pass filter.

### BACKGROUND ART

From JP 07-104122 A there is known band-pass filter which is constituted by alternately laminating high-refractive index dielectric films and low-refractive index dielectric films on both sides of a cavity layer, wherein its central wavelength of the pass band is λ₀. The optical film thicknesses of the respective high-refractive index dielectric films and the low-refractive index dielectric film are λ₀/4 and the optical film thickness of the cavity layer of integer times λ₀/2 is made large within a range larger than 0 and smaller than λ₀/2.

Optical multilayer band pass filters having a structure in which dielectric films having a higher refractive index and dielectric films having a lower refractive index are alternately deposited on a glass substrate or the like have, as their common optical characteristics, a "pass band" to allow light of a certain wavelength range to pass, "reflection bands (also referred to as stop bands)" to block light of certain frequency ranges lower than and higher than the pass band, and slope portions at the boundaries of the pass band and the reflection bands, over which the transmittance rises or falls. In the following description, the slope portion where the transmittance increases in a shorter wavelength side boundary between the pass band and the reflection band will be referred to as a "rise portion", and the slope portion where the transmittance decreases in the longer wavelength side boundary between the pass band and the refection band will be referred to as a "fall portion".

When subject light incidents onto such an optical multilayer band pass filter from an oblique direction, light is split into light having P-wave characteristics oriented parallel to a plane of incidence (which will be simply referred to as a P-wave or P-polarized light hereinafter) and light having S-wave characteristic oriented perpendicular to the plane of incidence (which will be simply referred to as a S-wave or S-polarized light hereinafter). In the band pass characteristics for the P-wave, the larger the angle of incidence of the subject light incident on the optical multilayer band pass filter is, the more the "rise portion" and the "fall portion" shift outward to make the width of the pass band larger. On the other hand, in the band pass characteristics for the S-wave, the larger the angle of incidence is, the more the "rise portion" and the "fall portion" in the band characteristics shift inward to make the width of the pass band smaller. Therefore, the larger the angle of incidence of the subject light incident on the optical multilayer band pass filter is, the more the wavelength of the "rise portion" and that of the "fall portion" are split into different wavelengths between the P-wave and the S-wave.

As long as the angle of incidence of the subject light on the optical multilayer band pass filter is in the range of 0 to approximately 15 degrees, such a split-up between the P-wave and the S-wave rarely causes practical problems. However, if the angle of incidence of the subject light is larger than 15 degrees, there is a possibility that practical problems arise.

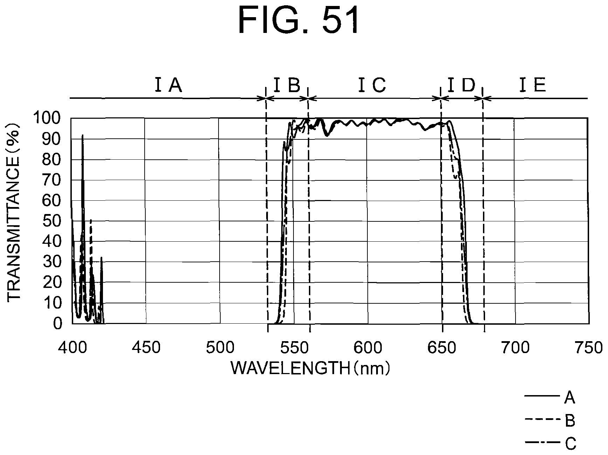

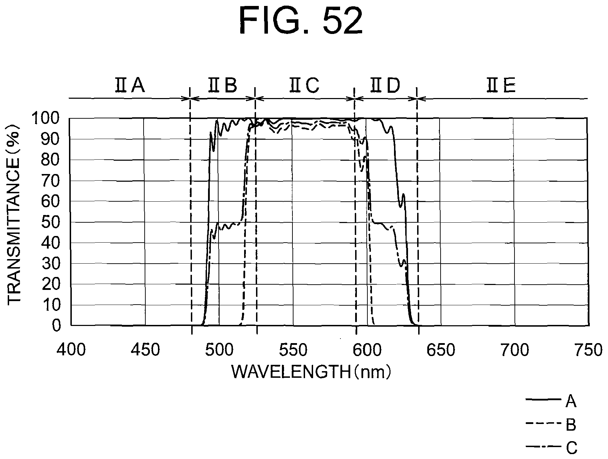

Fig. 51 shows the band pass characteristics of a typical optical multilayer band pass filter in a case where the subject light incidents thereon at an angle of incidence of 15 degrees. Fig. 52 shows the band pass characteristics of the typical optical multilayer band pass filter in a case where the subject light incidents thereon at an angle of incidence of 45 degrees. In Figs. 51 and 52, the solid curves A represent the transmission characteristics (Tp) with respect to the P-polarized light, the broken curves B represent the transmission characteristics (Ts) with respect to the S-polarized light, and the dot-and-dash curves C represent the average (Tmean) of the transmission characteristics with respect to the P-polarized light and the transmission characteristics with respect to the S-polarized light. In these graphs of the band pass characteristics, the vertical axis represents the transmittance (expressed in percent) , and the horizontal axis represents the wavelength (in units of nanometers). These graphs show the state of split-up between the polarized lights.

In Fig. 51, region IA is a shorter-wavelength reflection band, region IB is a rise portion, region IC is a pass band, region ID is a fall portion, and region IE is a longer-wavelength reflection band.

In Fig. 52, region IIA is a shorter-wavelength reflection band, region IIB is a rise portion, region IIC is a pass band, region IID is a fall portion, and region IIE is a longer-wavelength reflection band.

As will be seen from Fig. 51, in the case where the angle of incidence of the subject light is 15 degrees, no practical problems arise because the transmission characteristics with respect to the P-polarized light and the transmission characteristics with respect to the S-polarized light are substantially overlapping each other.

On the other hand, in the case where the angle of incidence of the subject light is 45 degree, the transmission characteristics with respect to the P-polarized light have the rise portion and the fall portion shifted outward, which make the width of the pass band larger, while the transmission characteristics with respect to the S-polarized light have the rise portion and the fall portion shifted inward, which make the width of the pass band smaller. Therefore, the transmission characteristics with respect to the P-polarized light have a broader transmission band as compared to the transmission characteristics with respect to the S-polarized light, possibly leading to practical problems.

For the above reason, it is necessary for optical multilayer band pass filters to have reduced polarization dependency causing split-up into the S-wave and the P-wave, in order to allow them to be used with subject light incident obliquely thereon. The following methods (1) and (2) have been developed to reduce the polarization dependency:
(1) Reducing the polarization dependency using a what is called a Fabry-Perot type band pass filter; and
(2) Attaching a film with reduced polarization dependency with respect to the rise portion to one side of a glass substrate and attaching a film with reduced polarization dependency with respect to the fall portion to the other side of the glass substrate to produce a band pass filter with reduced polarization dependency as a result of composite characteristics of the two films attached to the opposite sides of the glass plate.

### CITATION LIST

### PATENT LITERATURE

Patent Literature 1: Japanese Patent Application Laid-open Publication No. 7-104122
Patent Literature 2: Japanese Patent Application Laid-open Publication No. 2006-23602

### SUMMARY OF INVENTION

### TECHNICAL PROBLEM

However, the method (1) using a Fabry-Perot type band pass filter can reduce the polarization wave dependency with respect to only one of the rise portion and the fall portion, and split-up between the P-wave and the S-wave due to polarization dependency occurs at the other one of the rise portion and the fall portion.

On the other hand, the method (2) suffers from problems such as influences of a variation in the angle of incidence caused by an offset of the optical axis occurred when the light passes through the glass substrate in a utilization of reflected light, and ghost images generated by two-times reflections on the front and rear surfaces.

The present invention has been made in view of the above situations, and its object is to provide an optical multilayer band pass filter with reduced polarization dependency for obliquely incident light, and formed only on one side of a substrate to solve problems such as ghost images caused by reflections on two surfaces.

### SOLUTION TO PROBLEM

The object of the invention is attained by an optical multilayer band pass filter according to claim 1. Further developments of the invention are specified in the dependent claims.

### ADVANTAGEOUS EFFECTS OF INVENTION

The optical multilayer band pass filter according to the present invention is advantageous in that it has reduced polarization dependency for obliquely incident light and free from problems such as ghost images generated by reflection by two surfaces.

### BRIEF DESCRIPTION OF DRAWINGS

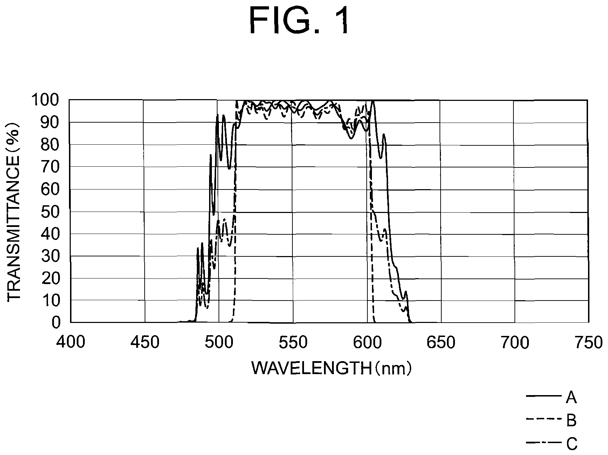

Fig. 1 is a graph showing band pass characteristics of an optical multilayer band pass filter according to example 1;

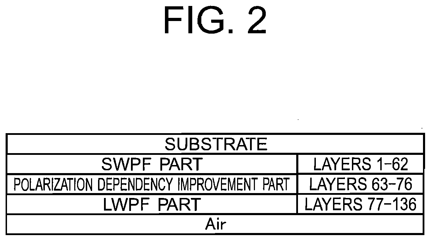

Fig. 2 is a cross sectional view showing the structure of the optical multilayer band pass filter according to example 1;

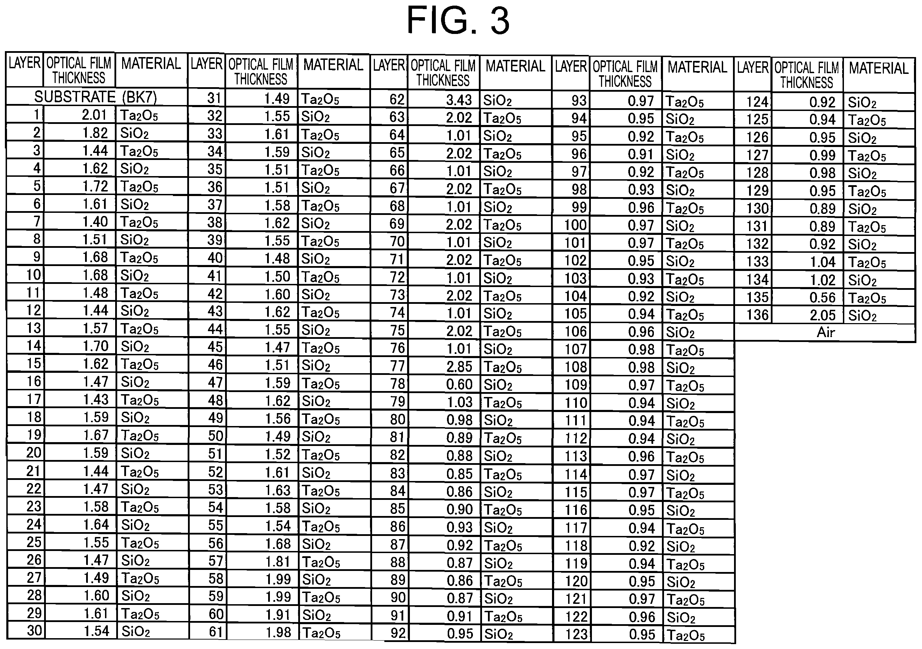

Fig. 3 shows the film thickness and the material of each layer of the optical multilayer band pass filter according to example 1;

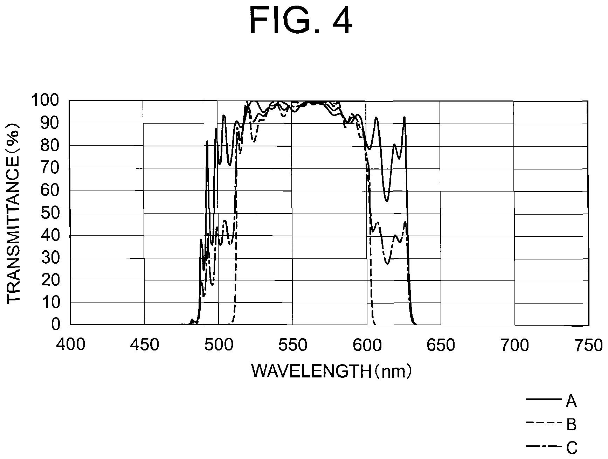

Fig. 4 is a graph showing band pass characteristics of an optical multilayer band pass filter according to a comparative example;

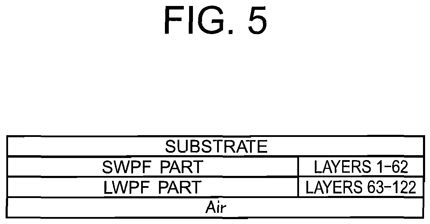

Fig. 5 is a cross sectional view showing the structure of the optical multilayer band pass filter according to the comparative example;

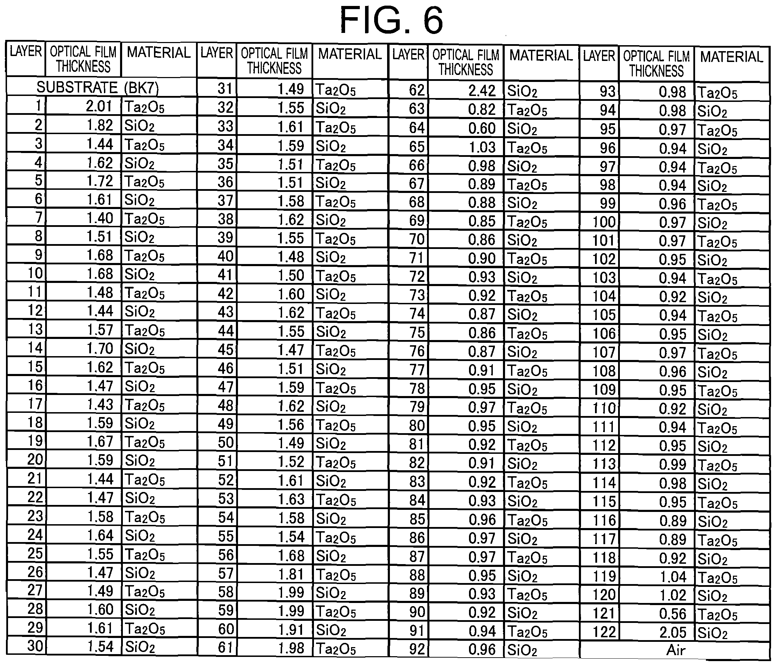

Fig. 6 shows the film thickness and the material of each layer of the optical multilayer band pass filter according to the comparative example;

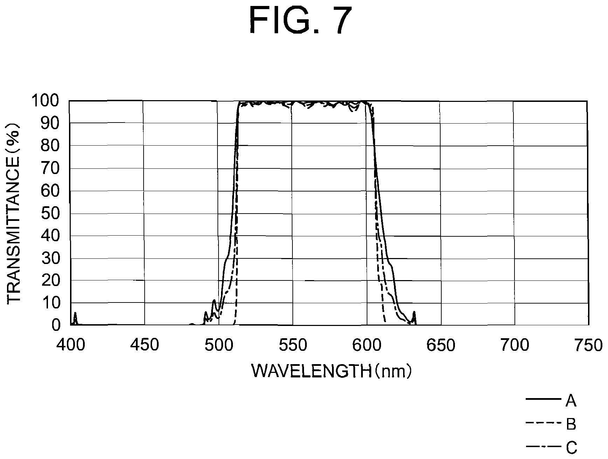

Fig. 7 is a graph showing band pass characteristics of an optical multilayer band pass filter according to example 2;

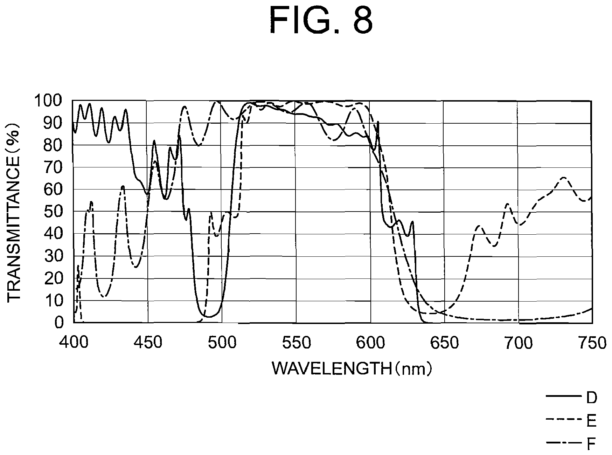

Fig. 8 is a graph showing band pass characteristics of an SWPF part, an LWPF part, and a polarization dependency improvement part in example 2;

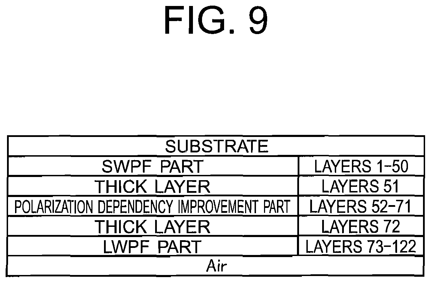

Fig. 9 is a cross sectional view showing the structure of the optical multilayer band pass filter according to example 2;

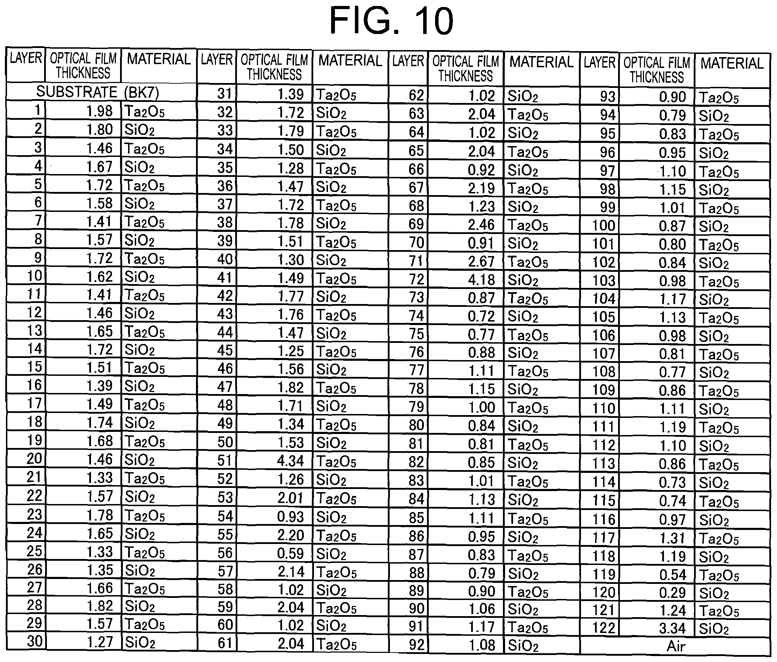

Fig. 10 shows the film thickness and the material of each layer of the optical multilayer band pass filter according to example 2;

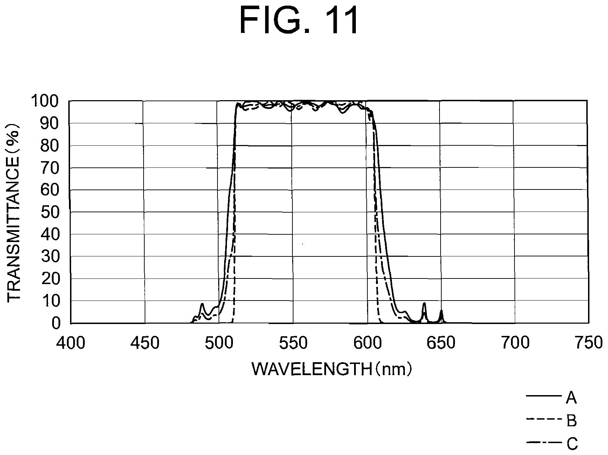

Fig. 11 is a graph showing band pass characteristics of an optical multilayer band pass filter according to example 3;

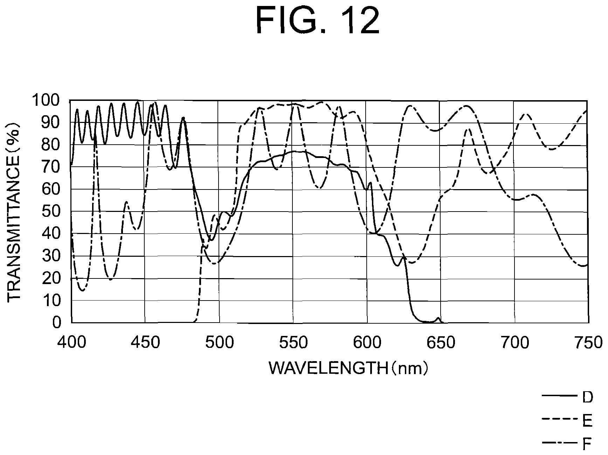

Fig. 12 is a graph showing band pass characteristics of an SWPF part, an LWPF part, and a polarization dependency improvement part in example 3;

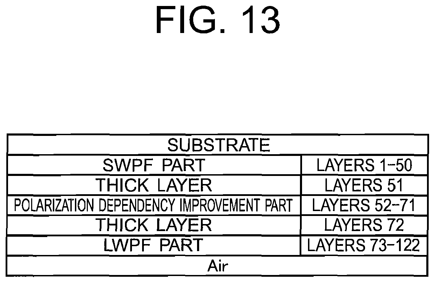

Fig. 13 is a cross sectional view showing the structure of the optical multilayer band pass filter according to example 3;

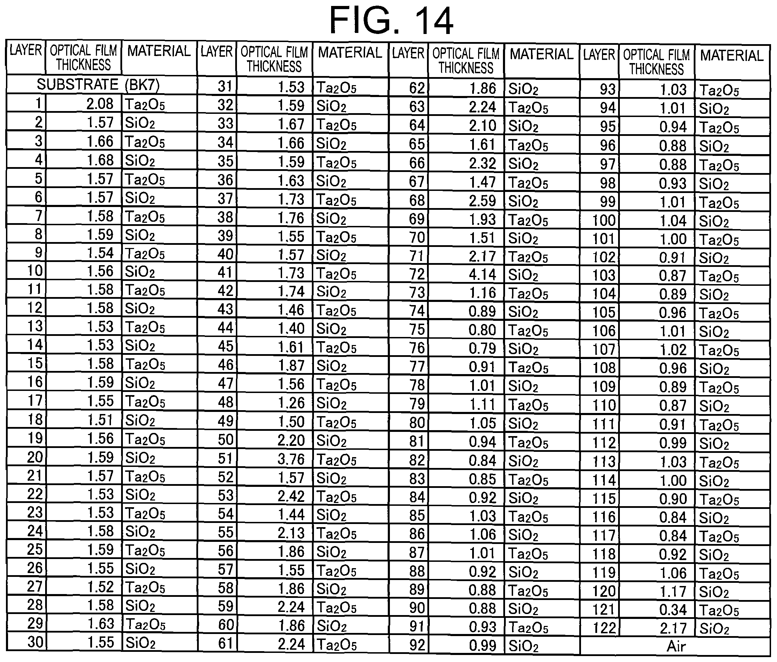

Fig. 14 shows the film thickness and the material of each layer of the optical multilayer band pass filter according to example 3;

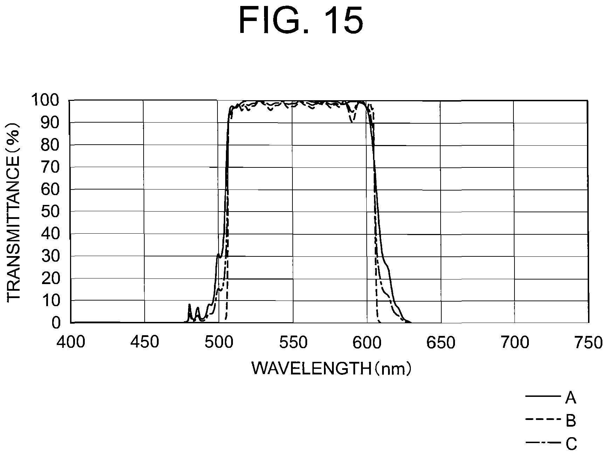

Fig. 15 is a graph showing band pass characteristics of an optical multilayer band pass filter according to example 4;

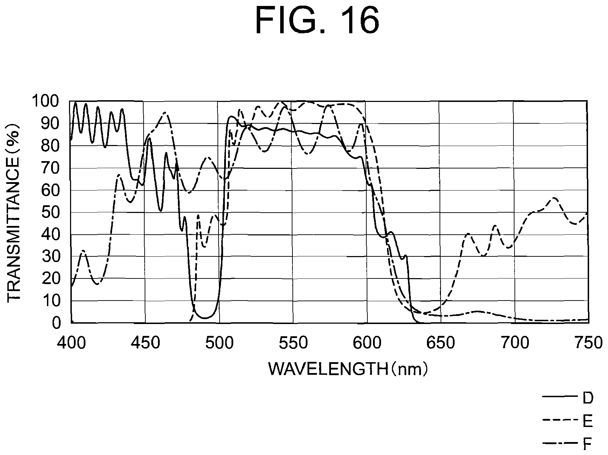

Fig. 16 is a graph showing band pass characteristics of an SWPF part, an LWPF part, and a polarization dependency improvement part in example 4;

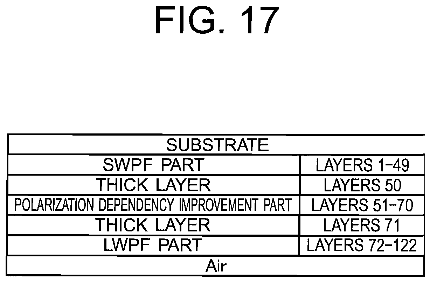

Fig. 17 is a cross sectional view showing the structure of the optical multilayer band pass filter according to example 4;

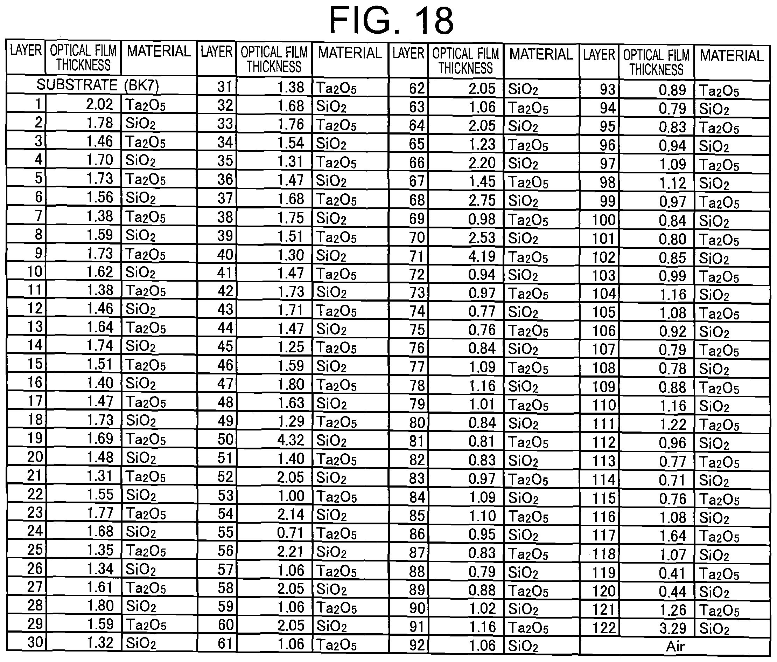

Fig. 18 shows the film thickness and the material of each layer of the optical multilayer band pass filter according to example 4;

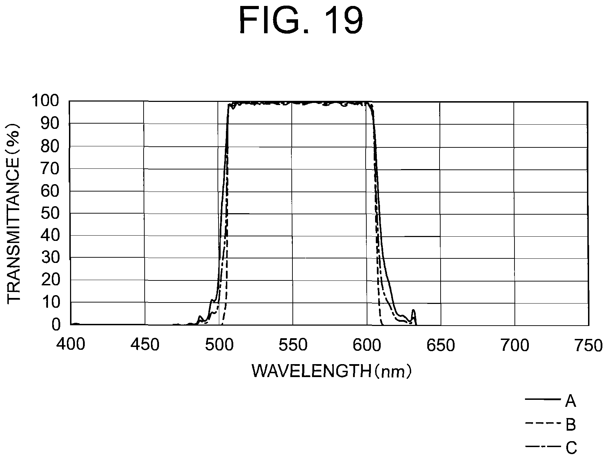

Fig. 19 is a graph showing band pass characteristics of an optical multilayer band pass filter according to example 5;

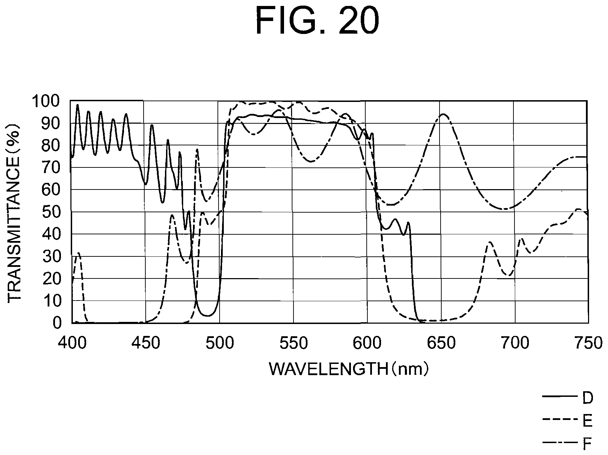

Fig. 20 is a graph showing band pass characteristics of an SWPF part, an LWPF part, and a polarization dependency improvement part in example 5;

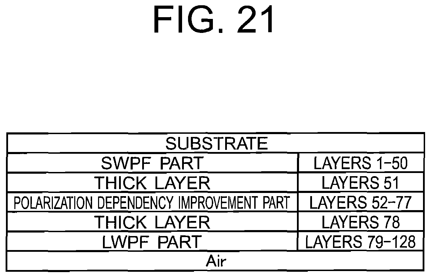

Fig. 21 is a cross sectional view showing the structure of the optical multilayer band pass filter according to example 5;

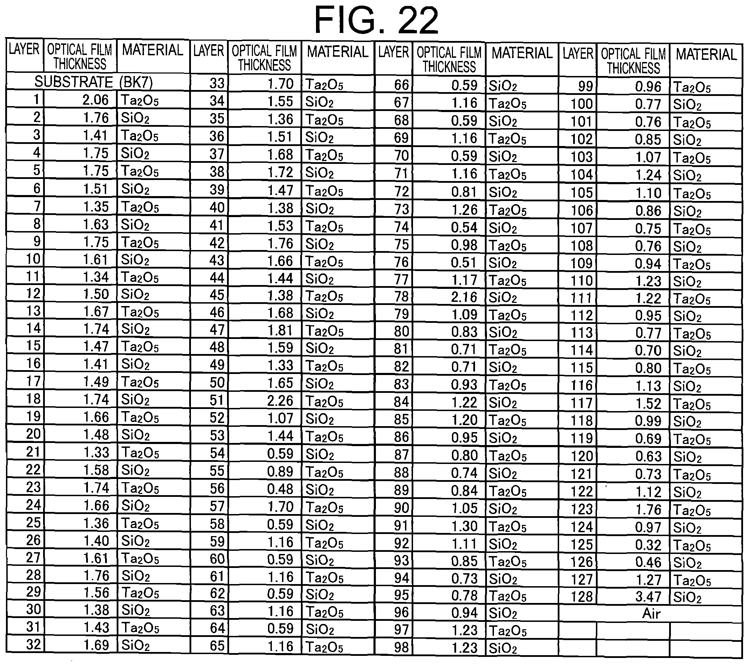

Fig. 22 shows the film thickness and the material of each layer of the optical multilayer band pass filter according to example 5;

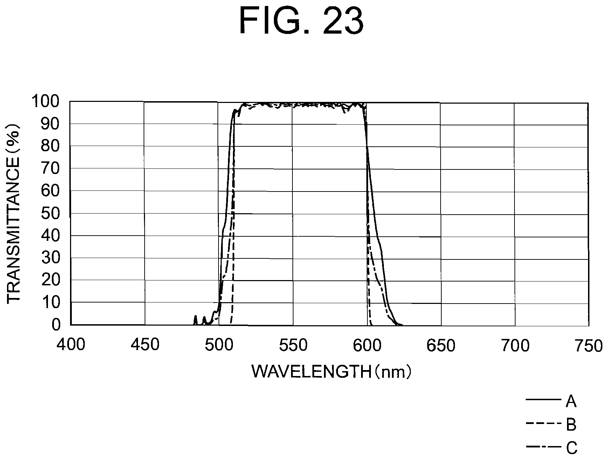

Fig. 23 is a graph showing band pass characteristics of an optical multilayer band pass filter according to example 6;

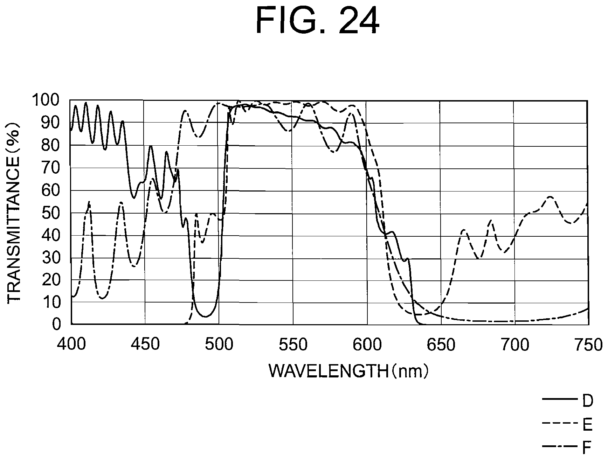

Fig. 24 is a graph showing band pass characteristics of an SWPF part, an LWPF part, and a polarization dependency improvement part in example 6;

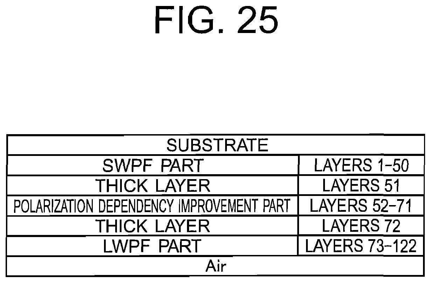

Fig. 25 is a cross sectional view showing the structure of the optical multilayer band pass filter according to example 6;

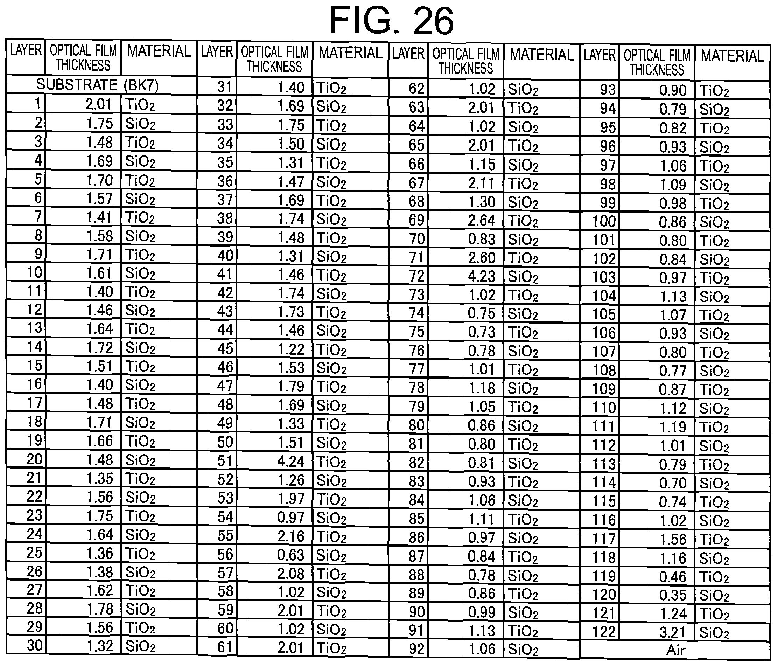

Fig. 26 shows the film thickness and the material of each layer of the optical multilayer band pass filter according to example 6;

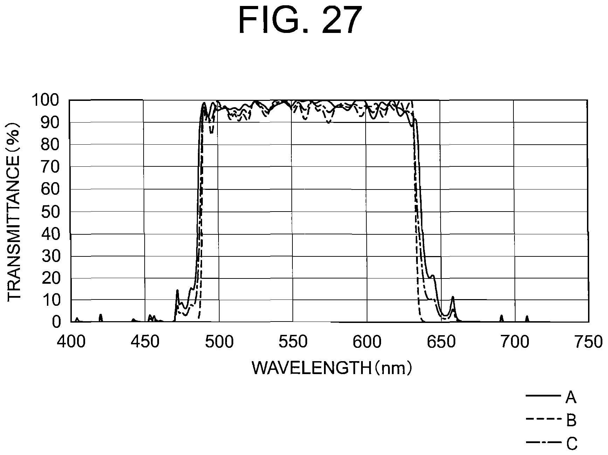

Fig. 27 is a graph showing band pass characteristics of an optical multilayer band pass filter according to example 7;

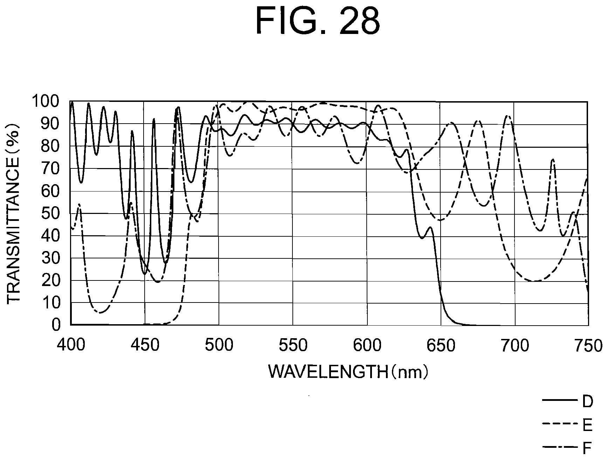

Fig. 28 is a graph showing band pass characteristics of an SWPF part, an LWPF part, and a polarization dependency improvement part in example 7;

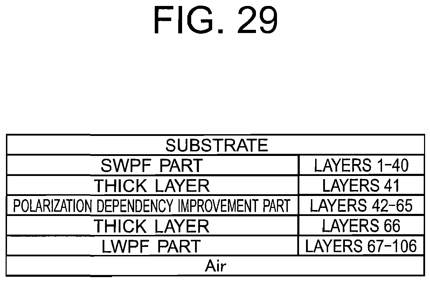

Fig. 29 is a cross sectional view showing the structure of the optical multilayer band pass filter according to example 7;

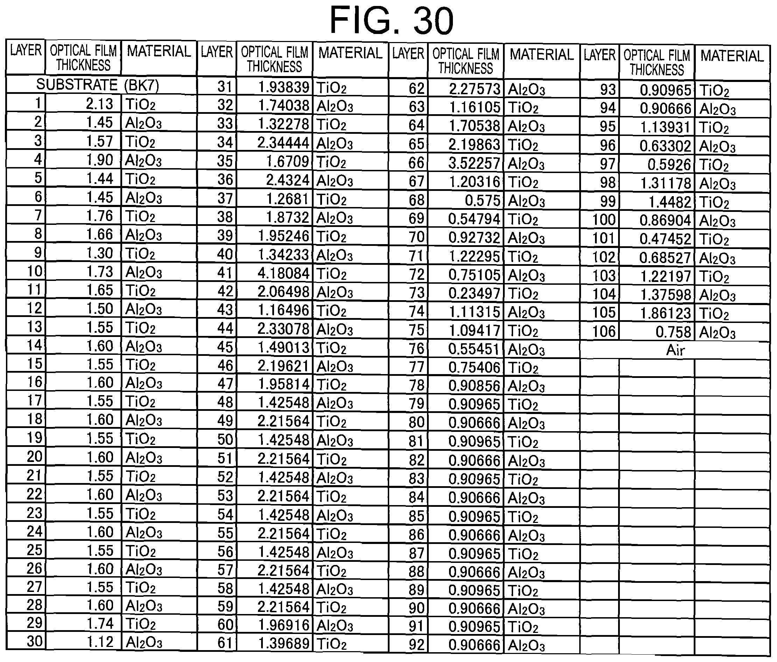

Fig. 30 shows the film thickness and the material of each layer of the optical multilayer band pass filter according to example 7;

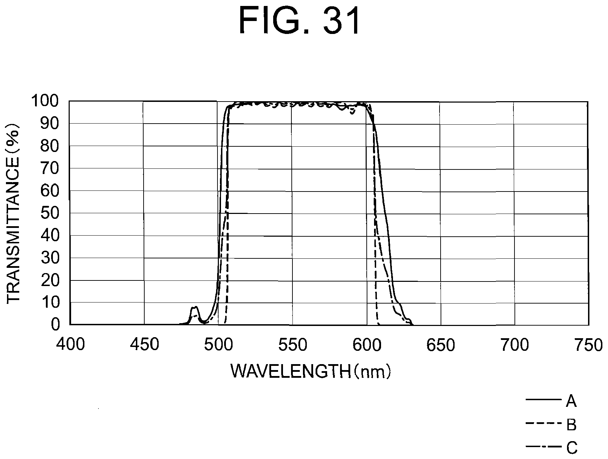

Fig. 31 is a graph showing band pass characteristics of an optical multilayer band pass filter according to example 8;

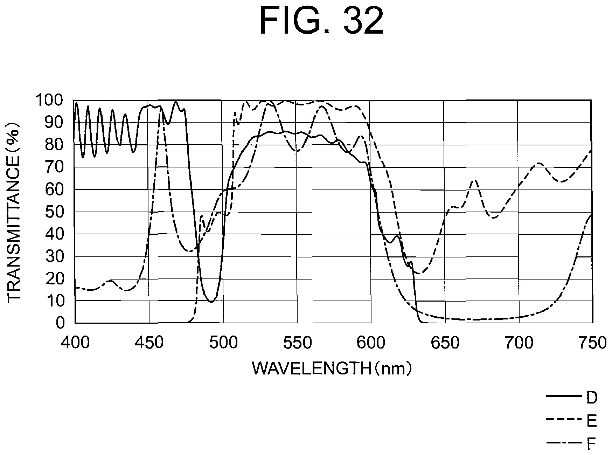

Fig. 32 is a graph showing band pass characteristics of an SWPF part, an LWPF part, and a polarization dependency improvement part in example 8;

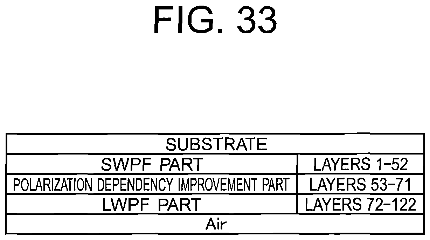

Fig. 33 is a cross sectional view showing the structure of the optical multilayer band pass filter according to example 8;

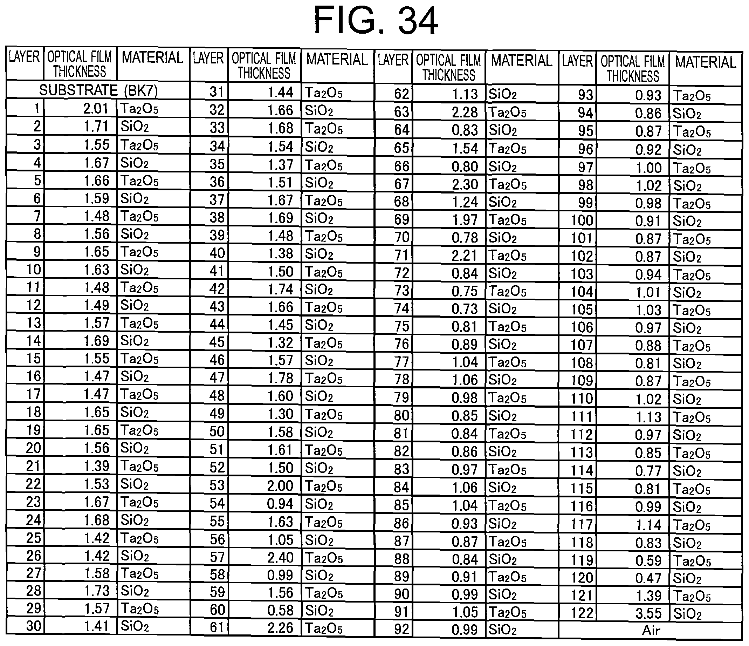

Fig. 34 shows the film thickness and the material of each layer of the optical multilayer band pass filter according to example 8;

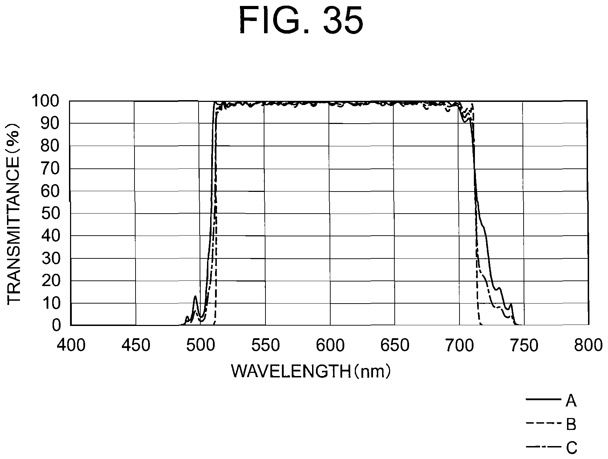

Fig. 35 is a graph showing band pass characteristics of an optical multilayer band pass filter according to example 9;

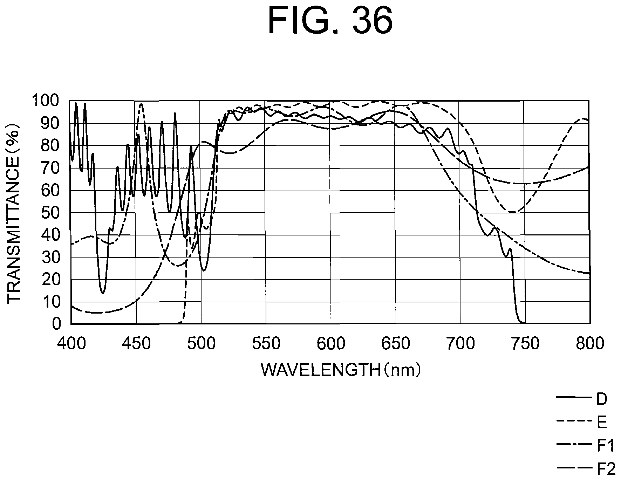

Fig. 36 is a graph showing band pass characteristics of an SWPF part, an LWPF part, and a polarization dependency improvement part in example 9;

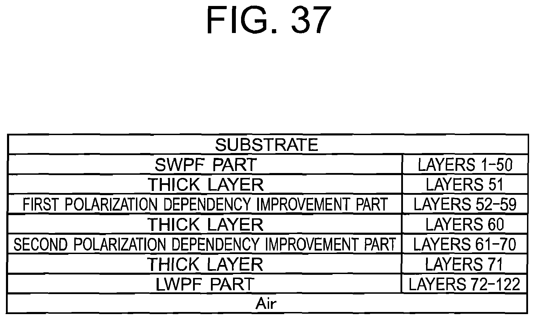

Fig. 37 is a cross sectional view showing the structure of the optical multilayer band pass filter according to example 9;

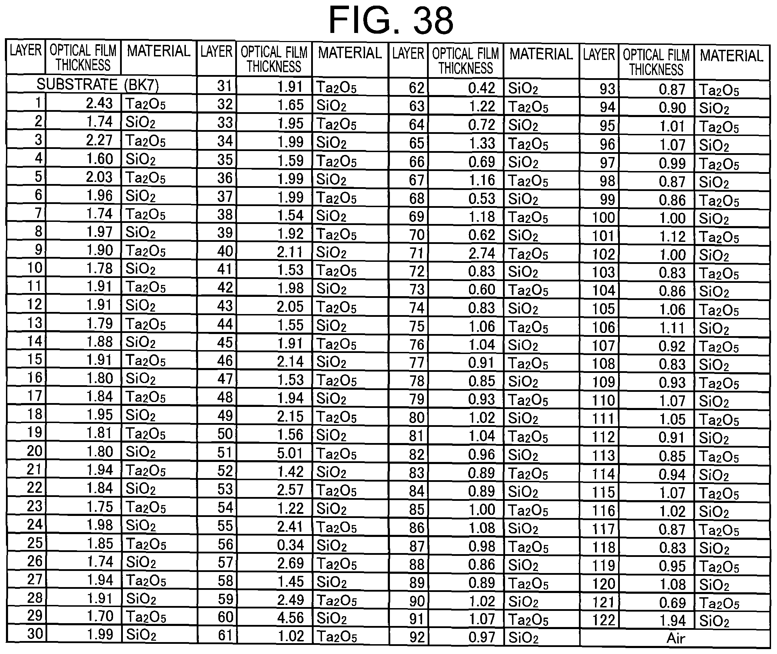

Fig. 38 shows the film thickness and the material of each layer of the optical multilayer band pass filter according to example 9;

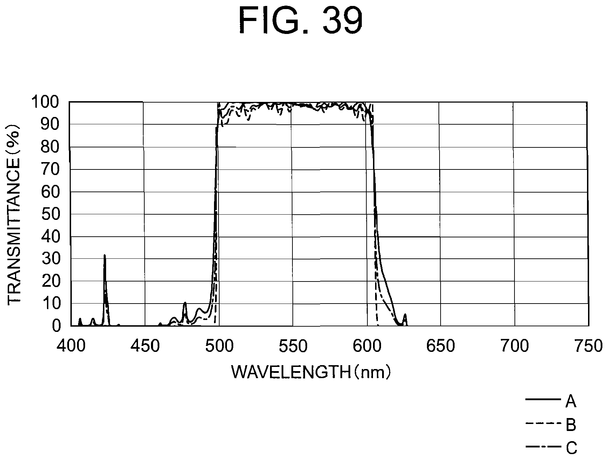

Fig. 39 is a graph showing band pass characteristics of an optical multilayer band pass filter according to example 10;

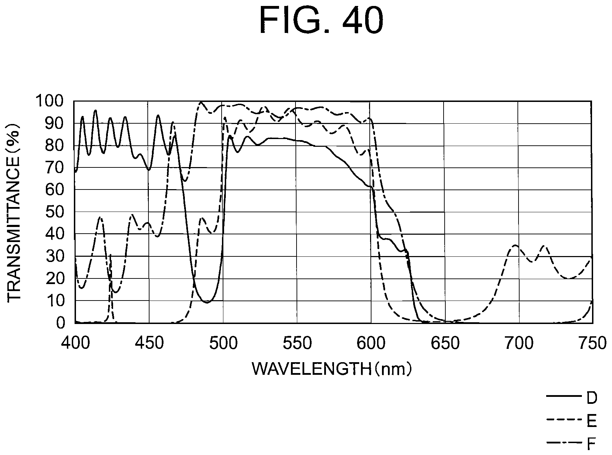

Fig.40 is a graph showing band pass characteristics of an SWPF part, an LWPF part, and a polarization dependency improvement part in example 10;

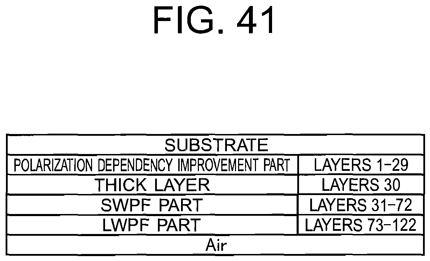

Fig. 41 is a cross sectional view showing the structure of the optical multilayer band pass filter according to example 10;

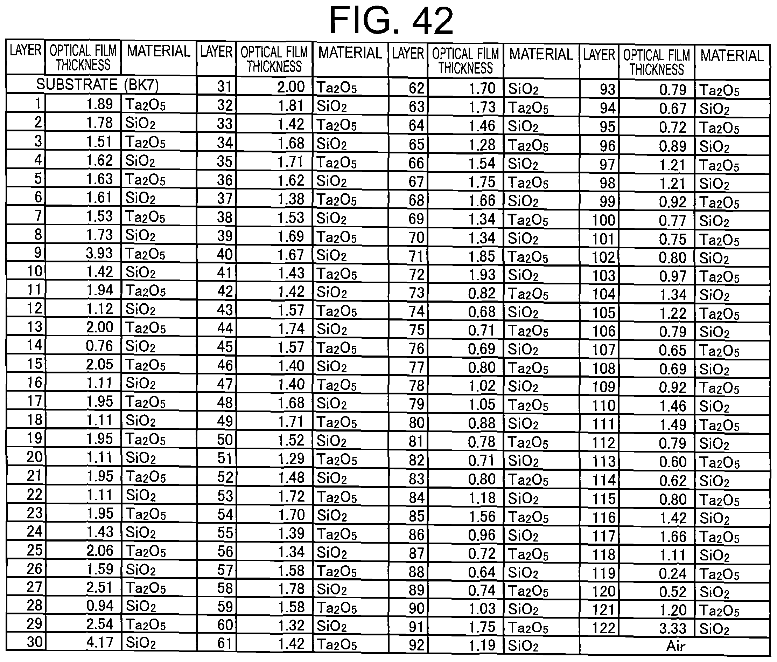

Fig. 42 shows the film thickness and the material of each layer of the optical multilayer band pass filter according to example 10;

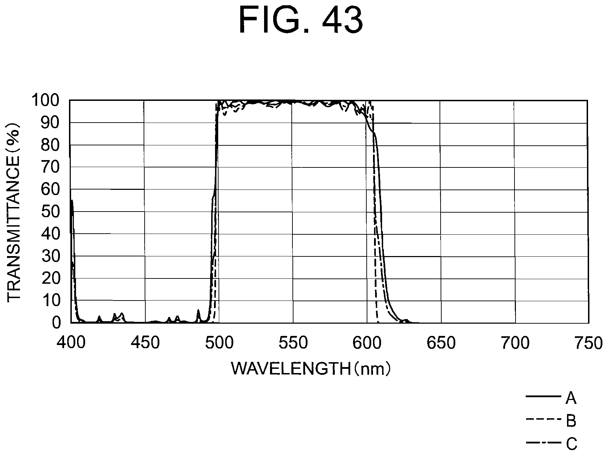

Fig. 43 is a graph showing band pass characteristics of an optical multilayer band pass filter according to example 11;

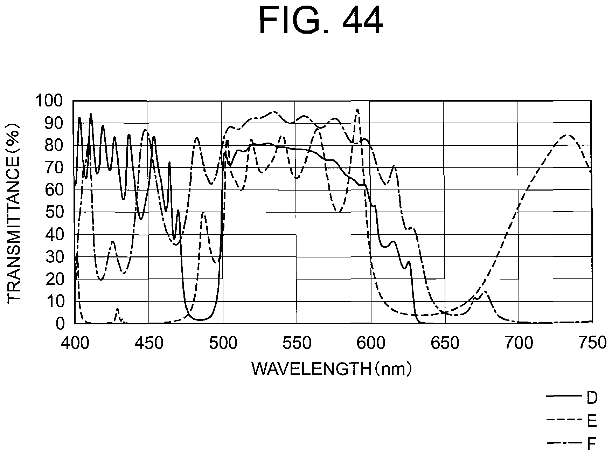

Fig. 44 is a graph showing band pass characteristics of an SWPF part, an LWPF part, and a polarization dependency improvement part in example 11;

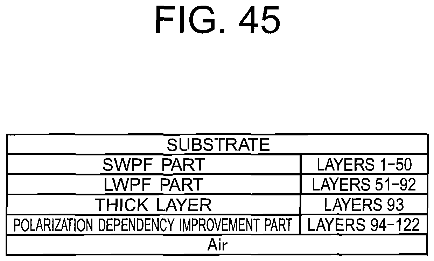

Fig. 45 is a cross sectional view showing the structure of the optical multilayer band pass filter according to example 11;

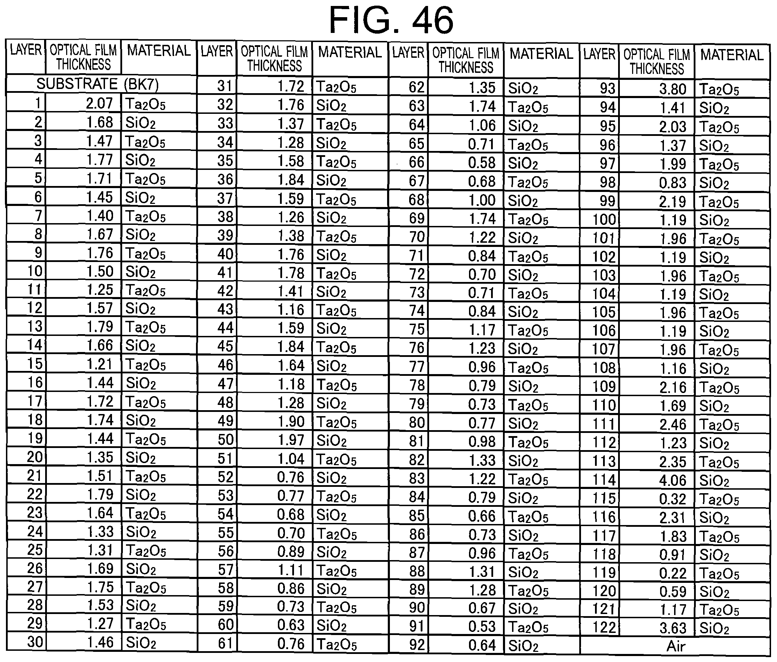

Fig. 46 shows the film thickness and the material of each layer of the optical multilayer band pass filter according to example 11;

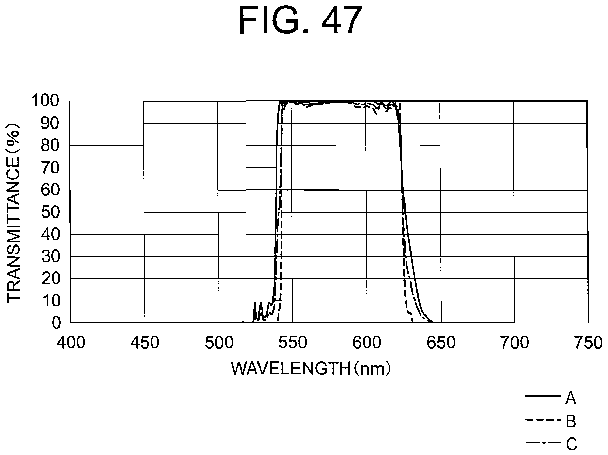

Fig. 47 is a graph showing band pass characteristics of an optical multilayer band pass filter according to example 12;

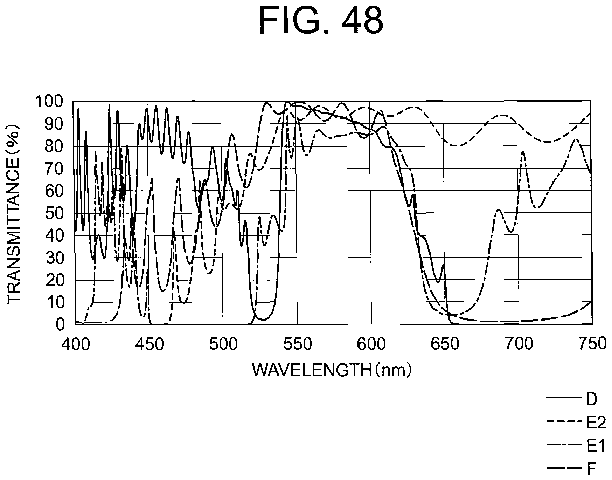

Fig. 48 is a graph showing band pass characteristics of an SWPF part, an LWPF part, and a polarization dependency improvement part in example 12;

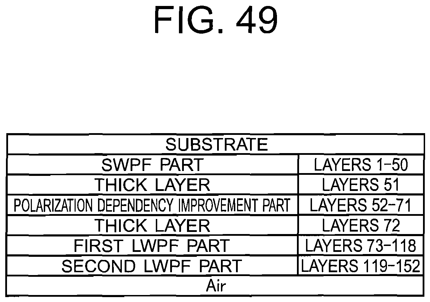

Fig. 49 is a cross sectional view showing the structure of the optical multilayer band pass filter according to example 12;

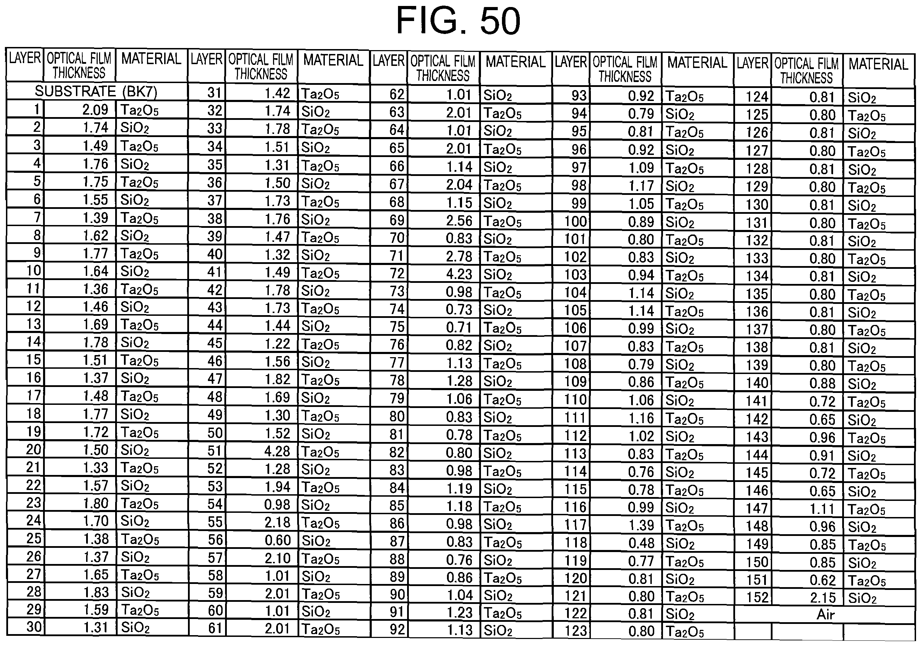

Fig. 50 shows the film thickness and the material of each layer of the optical multilayer band pass filter according to example 12;
Fig. 51 is a graph showing band pass characteristics of a typical optical multilayer band pass filter in a case where subject light is made incident thereon at an angle of incidence of 15 degrees; and
Fig. 52 is a graph showing band pass characteristics of the typical optical multilayer band pass filter in a case where subject light is made incident thereon at an angle of incidence of 45 degrees.

### DESCRIPTION OF EMBODIMENTS

In the following embodiments of the optical multilayer band pass filter according to the present invention will be described in detail with reference to the drawings. It should be noted that the present invention is by no means limited by the following embodiments.

Prior to the description of examples, the structure of an embodiment of the optical multilayer band pass filter according to the present invention will be described.

The optical multilayer band pass filter according to the embodiment is an optical multilayer band pass filter that is formed only on one side of a substrate that is transparent to subject light and has reduced polarization dependency in the rise portion and the fall portion at the boundaries of the pass band and the reflection bands for light obliquely incident on it at a predetermined angle.

The optical multilayer band pass filter according to the embodiment is characterized by comprising a substrate transparent to subject light, an LWPF part provided only on one side of the substrate, which forms a rise portion and a reflection band on a shorter wavelength side in band pass characteristics, an SWPF part, which forms a fall portion and a reflection band on a longer wavelength side in the band pass characteristics, and a polarization dependency improvement part, which controls split-up between the P-wave and the S-wave occurring in the rise portion and the fall portion formed respectively by the LWPF part and the SWPF part when the subject light is incident obliquely, wherein the LWPF part, the SWPF part, and the polarization dependency improvement part have a structure in which a plurality of higher refractive index layers made of a first dielectric material and a plurality of lower refractive index layers made of a second dielectric material having a refractive index lower than the first dielectric material are deposited alternately.

In the optical multilayer band pass filter according to the embodiment, it is preferred that the polarization dependency improvement part be composed only of two materials.

In the optical multilayer band pass filter according to the embodiment, it is preferred that the polarization dependency improvement part, the LWPF part and the SWPF part have a common transmission band in band pass characteristics, and the polarization dependency improvement part has , corresponding to the rise portion and the fall portion in the LWPF part and the SWPF part respectively, at least one of a rise portion, a fall portion, and a ripple portion in which the transmittance decreases partly that reduces the split-up between the P-wave and the S-wave occurring in the rise portion and the fall portion formed respectively by the LWPF part and the SWPF part when the subject light is incident obliquely.

In the optical multilayer band pass filter according to the embodiment, it is preferred that the optical multilayer band pass filter according to the present invention further comprising a matching layer arranged on one or both sides of the polarization dependency improvement part, that the matching layer comprise one or both of a layer made of the first dielectric material and a layer made of the second dielectric material, and that the layer or layers comprise a thick layer having a thickness several times larger than the thickness of the higher refractive index layers and the lower refractive index layers that constitute the polarization dependency improvement part.

In the optical multilayer band pass filter according to the embodiment, it is preferred that there be one or more polarization dependency improvement part arranged between the LWPF part and the SWPF part, or on the substrate side or the outer surface side of the LWPF part and the SWPF part.

In the optical multilayer band pass filter according to the embodiment, it is preferred that an additional LWPF part or SWPF part that forms a reflection band in band pass characteristics in a wavelength range longer than or shorter than the reflection bands formed by the LWPF part and the SWPF part respectively be provided in addition to the LWPF part and the SWPF part.

In the optical multilayer band pass filter according to the embodiment, the material of the substrate that is transparent to the subject light may be selected from a group consisting of optical glasses such as non-alkali glass, borosilicate glass, quartz glass, crystal, BK7 (trade name), and Tempax (trade name), crystalline materials such as sapphire, semiconductors, and synthetic resins.

In the optical multilayer band pass filter according to the embodiment, the first dielectric material as the material of which the higher refractive index layers are made and the second dielectric material as the material of which the lower refractive index layers having a refractive index lower than the higher refractive index layer may be at least two materials selected in combination from among, for example, TiO, TiO₂, Y₂O₃, Ta₂O₅, ZrO, ZrO₂, Si, SiO₂, HfO₂, Ge, Nb₂O₅, Nb₂O₆, CeO₂, CeF₃, ZnS, ZnO, Fe₂O₃, MgF₂, AlF₃, CaF₂, LiF, Na₃AlF₆, Na₅Al₃F₁₄, Al₂O₃, MgO, LaF, PbF₂, and NdF₃, and mixtures of these materials.

The method of depositing the higher refractive index layers and the lower refractive index layers having a refractive index lower than the higher refractive index layers in the optical multilayer band pass filter according to the embodiment may be, for example, any one of vacuum deposition, sputtering, PVD (Physical Vapor Deposition) by ion plating method, evaporation by heating a register, evaporation by electron beam (EB) heating, evaporation by high frequency wave heating, evaporation by laser beam heating, ionization sputtering, ion beam sputtering, plasma sputtering, ion assisted deposition, and radical-assisted sputtering.

In the following examples of the optical multilayer band pass filter according to the embodiment will be described. The following examples are given only for illustrative purposes. For example, the number of layers that constitute the optical multilayer band pass filter is not limited to those in the examples but can be increased or decreased in accordance with required specifications thereof.

In the following examples, the material of the substrate is BK7 (registered trademark).

In the examples, TiO₂ and Ta₂O₅ are used as dielectric materials for the higher refractive index layers made of the first dielectric material, and Al₂O₃ and SiO₂ are used as dielectric materials for the lower refractive index layers made of the second dielectric material having a refractive index lower than the first dielectric material. The thickness of each of the dielectric layers constituting the optical multilayer band pass filter is expressed in an optical layer thickness, in which λ/4 is expressed as 1 (unity) (i.e. λ/4 = 1), where λ is the wavelength of the subject light.

In graphs representing the band pass characteristics of the following examples and comparative example, the vertical axis represents transmittance (expressed in percent), and the horizontal axis represents wavelength (in units of nanometers) . These graphs respectively shows a polarization split state.

### (Example 1)

Fig. 1 is a graph showing the band pass characteristics of an optical multilayer band pass filter according to example 1. Fig. 2 is a cross sectional view showing the structure of the optical multilayer band pass filter according to example 1. Fig. 3 shows the film thickness and the material of each layer of the optical multilayer band pass filter according to example 1. In Fig. 1, the solid curve A represents the transmission characteristics (Tp) with respect to the P-polarized light, the broken curve B represents the transmission characteristics (Ts) with respect to the S-polarized light, and the dot-and-dash curve C represents the average (Tmean) of the transmission characteristics with respect to the P-polarized light and the transmission characteristics with respect to the S-polarized light. The optical thicknesses (λ/4 = 1) presented in Fig. 3 are those in the case where the angle of incidence is 45 degrees and the wavelength λ of the subject light is 498 nm.

As shown in Figs. 2 and 3, the optical multilayer band pass filter according to example 1 has a structure in which the SWPF part, the polarization dependency improvement part, and the LWPF part are deposited in order from the side of the substrate transparent to the subject light to the air side. In other words, the SWPF part is formed only on one side of the substrate, and the polarization dependency improvement part and the LWPF part are deposited in order on the SWPF part. Here, the air side refers to the outer surface side farthest from the substrate.

The SWPF part is composed of 62 layers, or layers 1 to 62, which form the fall portion falling from the pass band and the reflection band on the lower wavelength side.

The polarization dependency improvement part is composed of 14 layers, or layers 63 to 76, the layer structure of which controls split-up between the P-wave and the S-wave in the band pass characteristics occurring at the rise portion and the fall portion formed respectively by the LWPF part and the SWPF part.

The LWPF part is composed of 60 layers, or layers 77 to 136, which form the rise portion rising to the pass band and the reflection band on the shorter wavelength side. The LWPF part is provided only on one side of the substrate.

The SWPF part, the polarization dependency improvement part, and the LWPF part have a structure in which a plurality of higher refractive index layers made of Ta₂O₅ as the first dielectric material and a plurality of lower refractive index layers made of SiO₂ as the second dielectric material are deposited alternately.

### (Comparative example)

Fig. 4 is a graph showing the band pass characteristics of an optical multilayer band pass filter according to a comparative example. Fig. 5 is a cross sectional view showing the structure of the optical multilayer band pass filter according to the comparative example. Fig. 6 shows the film thickness and the material of each layer of the optical multilayer band pass filter according to the comparative example. In Fig. 4, the solid curve A represents the transmission characteristics (Tp) with respect to the P-polarized light, the broken curve B represents the transmission characteristics (Ts) with respect to the S-polarized light, and the dot-and-dash curve C represents the average (Tmean) of the transmission characteristics with respect to the P-polarized light and the transmission characteristics with respect to the S-polarized light. The optical thicknesses (λ/4 = 1) presented in Fig. 6 are those in the case where the angle of incidence is 45 degrees and the wavelength λ of the subject light is 498 nm.

As shown in Figs. 5 and 6, the optical multilayer band pass filter according to the comparative example has a structure in which an SWPF part and an LWPF part are deposited in order from the substrate side to the air side. The optical multilayer band pass filter according to the comparative example has a structure similar to that according to example 1 but lacks the polarization dependency improvement part that the optical multilayer band pass filter according to example 1 has. Specifically, the SWPF part is composed of 62 layers, or layers 1 to 62, and the LWPF part is composed of 60 layers, or layers 63 to 122. The SWPF part and the LWPF part have a structure in which a plurality of higher refractive index layers made of Ta₂O₅ as the first dielectric material and a plurality of lower refractive index layers made of SiO₂ as the second dielectric material are deposited alternately.

The comparison of Fig. 1 and Fig. 4 shows that the polarization dependency at the rise portion and the fall portion is improved in example 1 as compared to the comparative example. This consequently shows that the provision of the polarization dependency improvement part is effective in improving the polarization dependency.

In example 1, because matching of the polarization dependency improvement part with the LWPF part and the SWPF part is not adjusted when providing the polarization dependency improvement part, there is a relatively large portion (a ripple portion) in the wavelength range of the pass band in which the transmittance decreases. In example 2 and the subsequent examples described in the following, a thick layer is formed as a matching layer to adjust matching of the polarization dependency improvement part with the LWPF part and the SWPF part when providing the polarization dependency improvement part.

### (Examples 2 to 5)

Figs. 7, 11, 15, and 19 are graphs showing the band pass characteristics of optical multilayer band pass filters according to examples 2, 3, 4, and 5 respectively.

Figs. 8, 12, 16, and 20 are graphs showing the band pass characteristics of the SWPF part, the LWPF part, and the polarization dependency improvement part in examples 2, 3, 4, and 5 respectively.

Figs. 9, 13, 17, and 21 are cross sectional views showing the structure of the optical multilayer band pass filters according to examples 2, 3, 4, and 5 respectively.

Figs. 10, 14, 18, and 22 show the film thickness and the material of each layer of the optical multilayer band pass filters according to examples 2, 3, 4, and 5 respectively.

In Figs. 7, 11, 15, and 19, the solid curve A represents the transmission characteristics (Tp) with respect to the P-polarized light, the broken curve B represents the transmission characteristics (Ts) with respect to the S-polarized light, and the dot-and-dash curve C represents the average (Tmean) of the transmission characteristics with respect to the P-polarized light and the transmission characteristics with respect to the S-polarized light.

In Figs. 8, 12, 16, and 20, the solid curve D represents the transmission characteristics (the average (Tmean) of the transmission characteristics with respect to the P-polarized light and the transmission characteristics with respect to the S-polarized light) of the SWPF part, the broken line E represents the transmission characteristics (the average (Tmean) of the transmission characteristics with respect to the P-polarized light and the transmission characteristics with respect to the S-polarized light) of the LWPF part, and the dot-and-dash curve F represents the transmission characteristics (the average (Tmean) of the transmission characteristics with respect to the P-polarized light and the transmission characteristics with respect to the S-polarized light) of the polarization dependency improvement part. The optical thicknesses (λ/4 = 1) presented in Figs. 10, 14, 18, and 22 are those in the case where the angle of incidence is 45 degrees and the wavelength λ of the subject light is 498 nm.

The optical multilayer band pass filters according to examples 2 to 5 have a structure in which the SWPF part, a first thick layer, the polarization dependency improvement part, a second thick layer, and the LWPF part are deposited in order from the substrate side to the air side.

The SWPF part, the polarization dependency improvement part, and the LWPF part in the optical multilayer band pass filters according to examples 2 to 5 have a structure in which a plurality of higher refractive index layers made of Ta₂O₅ as the first dielectric material and a plurality of lower refractive index layers made of SiO₂ as the second dielectric material are deposited alternately.

In example 2, the SWPF part is composed of 50 layers, or layers 1 to 50. The thick layers are provided as the layers 51 and 72 on both sides of the polarization dependency improvement part. The polarization dependency improvement part is composed of 20 layers, or layers 52 to 71. The LWPF part is composed of 50 layers, or layers 73 to 122.

In the following description of example 2 and the subsequent examples, the description of the effects of each part of the optical multilayer band pass filter same as those in example 1 will be left out.

The thick layer 51 on the SWPF part side is made of Ta₂O₅, and the thick layer 72 on the LWPF part side is made of SiO₂. The layers 50 and 52 adjacent to the thick layer 51 are made of SiO₂, and the layers 71 and 73 adjacent to the thick layer 72 are made of Ta₂O₅. The thickness of the thick layers is several times larger than the thickness of the higher refractive index layers and the lower refractive index layers that constitute the polarization dependency improvement part.

In example 3, the SWPF part is composed of 50 layers, or layers 1 to 50. The thick layers are provided as the layers 51 and 72 on both sides of the polarization dependency improvement part. The polarization dependency improvement part is composed of 20 layers, or layers 52 to 71. The LWPF part is composed of 50 layers, or layers 73 to 122.

The thick layer 51 on the SWPF part side is made of Ta₂O₅, and the thick layer 72 on the LWPF part side is made of SiO₂. The layers 50 and 52 adjacent to the thick layer 51 are made of SiO₂, and the layers 71 and 73 adjacent to the thick layer 72 are made of Ta₂O₅. The thickness of the thick layers is several times larger than the thickness of the higher refractive index layers and the lower refractive index layers that constitute the polarization dependency improvement part.

In example 4, the SWPF part is composed of 49 layers, or layers 1 to 49. The thick layers are provided as the layers 50 and 71 on both sides of the polarization dependency improvement part. The polarization dependency improvement part is composed of 20 layers, or layers 51 to 70. The LWPF part is composed of 51 layers, or layers 72 to 122.

The thick layer 50 on the SWPF part side is made of SiO₂, and the thick layer 71 on the LWPF part side is made of Ta₂O₅. The layers 49 and 51 adjacent to the thick layer 50 are made of Ta₂O₅, and the layers 70 and 72 adjacent to the thick layer 71 are made of SiO₂. The thickness of the thick layers is several times larger than the thickness of the higher refractive index layers and the lower refractive index layers that constitute the polarization dependency improvement part.

In example 5, the SWPF part is composed of 50 layers, or layers 1 to 50. The thick layers are provided as the layers 51 and 78 on both sides of the polarization dependency improvement part. The polarization dependency improvement part is composed of 26 layers, or layers 52 to 77. The LWPF part is composed of 50 layers, or layers 79 to 128.

The thick layer 51 on the SWPF part side is made of Ta₂O₅, and the thick layer 78 on the LWPF part side is made of SiO₂. The layers 50 and 52 adjacent to the thick layer 51 are made of SiO₂, and the layers 77 and 79 adjacent to the thick layer 78 are made of Ta₂O₅. The thickness of the thick layers is several times larger than the thickness of the higher refractive index layers and the lower refractive index layers that constitute the polarization dependency improvement part.

In examples 2 to 5, the ratio of the film thickness of the higher refractive index layers in the polarization dependency improvement part and the film thickness of the lower refractive index layers in the polarization dependency improvement part is set as follows:
(1) Example 2: higher refractive index layer > lower refractive index layer (Fig. 7);
(2) Example 3: higher refractive index layer ≈ lower refractive index layer (Fig. 11);
(3) Example 4: higher refractive index layer < lower refractive index layer (Fig. 15); and
(4) Example 5: higher refractive index layer > lower refractive index layer (Fig. 19).

The characteristics of the LWPF part, the SWPF part, and the polarization dependency improvement part under the above-described conditions are shown in Figs. 8, 12, 16, and 20.

Since the band pass characteristics in examples 2 to 5 (Figs. 7, 11, 15, and 19) show effects of improvement in the polarization dependency, it will be understood that the polarization dependency improvement part effectively provides improvement in the polarization dependency irrespective of the ratio of the thickness of the higher refractive index layers and the thickness of the lower refractive index layers.

In examples 2 to 5, the polarization dependency improvement part has a common pass band in a range common with the pass bands of the LWPF part and the SWPF part.

In example 2, the fall portion of the polarization dependency improvement part overlaps the fall portion of the SWPF part, as shown in Fig. 8.

In example 3, a ripple portion of the polarization dependency improvement part overlaps the rise portion of the LWPF part and the fall portion of the SWPF part respectively, as shown in Fig. 12.

In example 4, a ripple portion and the fall portion of the polarization dependency improvement part overlap the rise portion of the LWPF part and the fall portion of the SWPF part respectively, as shown in Fig. 16.

In example 5, the rise portion and a ripple portion of the polarization dependency improvement part overlap the rise portion of the LWPF part and the fall portion of the SWPF part respectively, as shown in Fig. 20. The characteristics of the polarization dependency improvement part satisfy the above-described conditions.

As will be seen from Figs. 7, 11, 15, and 19, the provision of the polarization dependency improvement part improves the polarization dependency of the optical multilayer band pass filters. This is because in the rise portion and the fall portion formed by the LWPF part and the SWPF part respectively, where the subject light splits between the P-wave and the S-wave, the characteristic curve with respect to the P-wave is shifted toward the characteristic curve with respect to the S-wave to realize a band pass characteristics of improved polarization dependency. This is done by overlapping the rise portion, the fall portion, or the ripple portion formed by the polarization dependency improvement part with the rise portions and the fall portions formed by the LWPF part and the SWPF part. The shift of the characteristic curve with respect to the P-wave toward the characteristic curve with respect to the S-wave means, in terms of band pass filter characteristics, that as (1) the rise portion and the fall portion formed by the P-wave, (2) the pass band formed by the P-wave between the rise portion formed by the P-wave and the rise portion formed by the S-wave, and (3) the pass band formed by the P-wave between the fall portion formed by the P-wave and the fall portion formed by the S-wave are overlapped by (4) the rise portion, the fall portion and the ripple portion formed by the polarization dependency improvement part, the transmittance with respect to the P-wave decreases in the overlapping range, resulting in a narrowing of the pass band with respect to the P-wave.

### (Examples 6 and 7)

While higher refractive index layers made of Ta₂O₅ and lower refractive index layers made of SiO₂ are alternately deposited in all of the above-described examples 1 to 5, other combinations of dielectric materials are used in examples 6 and 7.

Figs. 23 and 27 are graphs showing the band pass characteristics of optical multilayer band pass filters according to examples 6 and 7 respectively.

Figs. 24 and 28 are graphs showing the band pass characteristics of the SWPF part, the LWPF part, and the polarization dependency improvement part in examples 6 and 7 respectively.

Figs. 25 and 29 are cross sectional views showing the structure of the optical multilayer band pass filters according to examples 6 and 7 respectively.

Figs. 26 and 30 show the film thickness and the material of each layer of the optical multilayer band pass filters according to examples 6 and 7 respectively.

In Figs. 23 and 27, the solid curve A represents the transmission characteristics (Tp) with respect to the P-polarized light, the broken curve B represents the transmission characteristics (Ts) with respect to the S-polarized light, and the dot-and-dash curve C represents the average (Tmean) of the transmission characteristics with respect to the P-polarized light and the transmission characteristics with respect to the S-polarized light.

In Figs. 24 and 28, the solid curve D represents the transmission characteristics (the average (Tmean) of the transmission characteristics with respect to the P-polarized light and the transmission characteristics with respect to the S-polarized light) of the SWPF part, the broken line E represents the transmission characteristics (the average (Tmean) of the transmission characteristics with respect to the P-polarized light and the transmission characteristics with respect to the S-polarized light) of the LWPF part, and the dot-and-dash curve F represents the transmission characteristics (the average (Tmean) of the transmission characteristics with respect to the P-polarized light and the transmission characteristics with respect to the S-polarized light) of the polarization dependency improvement part.

The optical thicknesses (λ/4 = 1) presented in Figs. 26 and 30 are those in the case where the angle of incidence is 45 degrees and the wavelength λ of the subject light is 498 nm.

The optical multilayer band pass filters according to examples 6 and 7 have a structure in which the SWPF part, a thick layer, the polarization dependency improvement part, a thick layer, and the LWPF part are deposited in order from the substrate side to the air side.

In example 6, the SWPF part is composed of 50 layers, or layers 1 to 50. The thick layers are provided as the layers 51 and 72 on both sides of the polarization dependency improvement part. The polarization dependency improvement part is composed of 20 layers, or layers 52 to 71. The LWPF part is composed of 50 layers, or layers 73 to 122.

The SWPF part, the polarization dependency improvement part, and the LWPF part in the optical multilayer band pass filter according to example 6 have a structure in which a plurality of higher refractive index layers made of TiO₂ as the first dielectric material and a plurality of lower refractive index layers made of SiO₂ as the second dielectric material are deposited alternately.

The thick layer 51 on the SWPF part side is made of TiO₂, and the thick layer 72 on the LWPF part side is made of SiO_{2.} The layers 50 and 52 adjacent to the thick layer 51 are made of SiO₂, and the layers 71 and 73 adjacent to the thick layer 72 are made of TiO₂. The thickness of the thick layers is several times larger than the thickness of the higher refractive index layers and the lower refractive index layers that constitute the polarization dependency improvement part.

In example 7, the SWPF part is composed of 40 layers, or layers 1 to 40. The thick layers are provided as the layers 41 and 66 on both sides of the polarization dependency improvement part. The polarization dependency improvement part is composed of 24 layers, or layers 42 to 65. The LWPF part is composed of 40 layers, or layers 67 to 106.

The SWPF part, the polarization dependency improvement part, and the LWPF part in the optical multilayer band pass filter according to example 7 have a structure in which a plurality of higher refractive index layers made of TiO₂ as the first dielectric material and a plurality of lower refractive index layers made of Al₂O₃ as the second dielectric material are deposited alternately.

The thick layer 41 on the SWPF part side is made of TiO₂, and the thick layer 66 on the LWPF part side is made of AI₂O₃. The layers 40 and 42 adjacent to the thick layer 41 are made of AI₂O₃, and the layers 65 and 67 adjacent to the thick layer 66 are made of TiO₂. The thickness of the thick layers is several times larger than the thickness of the higher refractive index layers and the lower refractive index layers that constitute the polarization dependency improvement part.

As will be seen from Figs. 23 and 27, the use of combinations of higher refractive index layers and lower refractive index layers (in examples 6 and 7) different from those in examples 1 to 5 provides characteristics with improved polarization dependency. This suggests that various combinations of materials can be used as the first dielectric material and the second dielectric material.

### (Example 8)

Fig. 31 is a graph showing the band pass characteristics of an optical multilayer band pass filter according to example 8. Fig. 32 is a graph showing the band pass characteristics of the SWPF part, the LWPF part, and the polarization dependency improvement part in example 8. Fig. 33 is a cross sectional view showing the structure of the optical multilayer band pass filter according to example 8. Fig. 34 shows the film thickness and the material of each layer of the optical multilayer band pass filter according to example 8.

In Fig. 31, the solid curve A represents the transmission characteristics (Tp) with respect to the P-polarized light, the broken curve B represents the transmission characteristics (Ts) with respect to the S-polarized light, and the dot-and-dash curve C represents the average (Tmean) of the transmission characteristics with respect to the P-polarized light and the transmission characteristics with respect to the S-polarized light. In Fig. 32, the solid curve D represents the transmission characteristics (the average (Tmean) of the transmission characteristics with respect to the P-polarized light and the transmission characteristics with respect to the S-polarized light) of the SWPF part, the broken line E represents the transmission characteristics (the average (Tmean) of the transmission characteristics with respect to the P-polarized light and the transmission characteristics with respect to the S-polarized light) of the LWPF part, and the dot-and-dash curve F represents the transmission characteristics (the average (Tmean) of the transmission characteristics with respect to the P-polarized light and the transmission characteristics with respect to the S-polarized light) of the polarization dependency improvement part. The optical thicknesses (λ/4 = 1) presented in Fig. 34 are those in the case where the angle of incidence is 45 degrees and the wavelength λ of the subject light is 498 nm.

The optical multilayer band pass filter according to example 8 has a structure in which the SWPF part, the polarization dependency improvement part, and the LWPF part are deposited in order from the substrate side to the air side.

The SWPF part is composed of 52 layers, or layers 1 to 52. The polarization dependency improvement part is composed of 19 layers, or layers 53 to 71. The LWPF part is composed of 51 layers, or layers 72 to 122.

The SWPF part, the polarization dependency improvement part, and the LWPF part have a structure in which a plurality of higher refractive index layers made of Ta₂O₅ as the first dielectric material and a plurality of lower refractive index layers made of SiO₂ as the second dielectric material are deposited alternately.

Although the optical multilayer band pass filter according to example 8 does not have a thick layer, it has improved polarization dependency in the rise portion and the fall portion, as will be seen from Fig. 31. However, a low peak tends to appear near the foot of the rise portion. In order to have characteristic curve with clearer rise and fall portions, it is desirable that thick layers be provided.

### (Example 9)

Fig. 35 is a graph showing the band pass characteristics of an optical multilayer band pass filter according to example 9. Fig. 36 is a graph showing the band pass characteristics of the SWPF part, the LWPF part, and the polarization dependency improvement part in example 9. Fig. 37 is a cross sectional view showing the structure of the optical multilayer band pass filter according to example 9. Fig. 38 shows the film thickness and the material of each layer of the optical multilayer band pass filter according to example 9.

In Fig. 35, the solid curve A represents the transmission characteristics (Tp) with respect to the P-polarized light, the broken curve B represents the transmission characteristics (Ts) with respect to the S-polarized light, and the dot-and-dash curve C represents the average (Tmean) of the transmission characteristics with respect to the P-polarized light and the transmission characteristics with respect to the S-polarized light. In Fig. 36, the solid curve D represents the transmission characteristics (the average (Tmean) of the transmission characteristics with respect to the P-polarized light and the transmission characteristics with respect to the S-polarized light) of the SWPF part, the broken line E represents the transmission characteristics (the average (Tmean) of the transmission characteristics with respect to the P-polarized light and the transmission characteristics with respect to the S-polarized light) of the LWPF part, the dot-and-dash curve F1 represents the transmission characteristics (the average (Tmean) of the transmission characteristics with respect to the P-polarized light and the transmission characteristics with respect to the S-polarized light) of a first polarization dependency improvement part, and the broken curve F2 represents the transmission characteristics (the average (Tmean) of the transmission characteristics with respect to the P-polarized light and the transmission characteristics with respect to the S-polarized light) of a second polarization dependency improvement part. The optical thicknesses (λ/4 = 1) presented in Fig. 38 are those in the case where the angle of incidence is 45 degrees and the wavelength λ of the subject light is 498 nm.

The optical multilayer band pass filter according to example 9 is provided with a plurality of polarization dependency improvement parts to have a structure in which the SWPF part, a first thick layer, the first polarization dependency improvement part, a second thick layer, the second polarization dependency improvement part, a third thick layer and the LWPF part are deposited in order from the substrate side to the air side.

The SWPF part is composed of 50 layers, or layers 1 to 50. The thick layers are provided as the layers 51, 60, and 71 on both sides of the first and second polarization dependency improvement parts. The first polarization dependency improvement part is composed of 8 layers, or layers 52 to 59. The second polarization dependency improvement part is composed of 10 layers, or layers 61 to 70. The LWPF part is composed of 51 layers, or layers 72 to 122.

The SWPF part, the two polarization dependency improvement parts, and the LWPF part have a structure in which a plurality of higher refractive index layers made of Ta₂O₅ as the first dielectric material and a plurality of lower refractive index layers made of SiO₂ as the second dielectric material are deposited alternately.

The thick layer 51 on the SWPF part side is made of Ta₂O₅, the layer 60 is made of SiO₂, and the layer 71 is made of Ta₂O₅. The layers 50 and 52 adjacent to the thick layer 51 are made of SiO₂, the layers 59 and 61 adjacent to the thick layer 60 are made of Ta₂O₅, and the layers 70 and 72 adjacent to the thick layer 71 are made of SiO₂. The thickness of the thick layers is several times larger than the thickness of the higher refractive index layers and the lower refractive index layers that constitute the polarization dependency improvement parts.

As shown in Fig. 36, the first polarization dependency improvement part has characteristics having a rise portion that overlaps the fall portion of the SWPF part, and the second polarization dependency improvement part has characteristics having a rise portion that overlaps the rise portion of the LWPF part.

As will be seen from Fig. 35, characteristics with intended improvement in the polarization dependency can also be achieved by the provision of a plurality of polarization dependency improvement parts. Therefore, it should be understood that a plurality of polarization dependency improvement part may be provided.

### (Examples 10 and 11)

While in examples 1 to 9, the polarization dependency improvement part is arranged between the SWPF part and the LWPF part, in example 10 the polarization dependency improvement part is arranged closer to the substrate than the SWPF part and the LWPF part, and in example 11 the polarization dependency improvement part is arranged closer to the outer surface (or the air side) than the SWPF part and the LWPF part.

Figs. 39 and 43 are graphs showing the band pass characteristics of optical multilayer band pass filters according to examples 10 and 11 respectively. Figs. 40 and 44 are graphs showing the band pass characteristics of the SWPF part, the LWPF part, and the polarization dependency improvement part in examples 10 and 11 respectively. Figs. 41 and 45 are cross sectional views showing the structure of the optical multilayer band pass filters according to examples 10 and 11 respectively. Figs. 42 and 46 show the film thickness and the material of each layer of the optical multilayer band pass filters according to examples 10 and 11 respectively.

In Figs. 39 and 43, the solid curve A represents the transmission characteristics (Tp) with respect to the P-polarized light, the broken curve B represents the transmission characteristics (Ts) with respect to the S-polarized light, and the dot-and-dash curve C represents the average (Tmean) of the transmission characteristics with respect to the P-polarized light and the transmission characteristics with respect to the S-polarized light. In Figs. 40 and 44, the solid curve D represents the transmission characteristics (the average (Tmean) of the transmission characteristics with respect to the P-polarized light and the transmission characteristics with respect to the S-polarized light) of the SWPF part, the broken line E represents the transmission characteristics (the average (Tmean) of the transmission characteristics with respect to the P-polarized light and the transmission characteristics with respect to the S-polarized light) of the LWPF part, and the dot-and-dash curve F represents the transmission characteristics (the average (Tmean) of the transmission characteristics with respect to the P-polarized light and the transmission characteristics with respect to the S-polarized light) of the polarization dependency improvement part. The optical thicknesses (λ/4 = 1) presented in Figs. 42 and 46 are those in the case where the angle of incidence is 45 degrees and the wavelength λ of the subject light is 500 nm.

The optical multilayer band pass filters according to example 10 has a structure in which the polarization dependency improvement part, a thick layer, the SWPF part, and the LWPF part are deposited in order from the substrate side to the air side.

The polarization dependency improvement part is composed of 29 layers, or layers 1 to 29. The thick layer is provided as layer 30 immediately over the polarization dependency improvement part. The SWPF part is composed of 42 layers, or layers 31 to 72. The LWPF part is composed of 50 layers, or layers 73 to 122.

The polarization dependency improvement part, the SWPF part, and the LWPF part have a structure in which a plurality of higher refractive index layers made of Ta₂O₅ as the first dielectric material and a plurality of lower refractive index layers made of SiO₂ as the second dielectric material are deposited alternately.

The thick layer 30 is made of SiO₂, and the layers 29 and 31 adjacent thereto are made of Ta₂O₅. The thickness of the thick layer 30 is several times larger than the thickness of the higher refractive index layers and the lower refractive index layers that constitute the polarization dependency improvement part.

The optical multilayer band pass filters according to example 11 has a structure in which the SWPF part, the LWPF part, a thick layer, and the polarization dependency improvement part are deposited in order from the substrate side to the air side.

The SWPF part is composed of 50 layers, or layers 1 to 50. The LWPF part is composed of 42 layers, or layers 51 to 92. The thick layer is provided as the layer 93 immediately under the polarization dependency improvement part. The polarization dependency improvement part is composed of 29 layers, or layers 94 to 122.

The SWPF part, the LWPF part, and the polarization dependency improvement part have a structure in which a plurality of higher refractive index layers made of Ta₂O₅ as the first dielectric material and a plurality of lower refractive index layers made of SiO₂ as the second dielectric material are deposited alternately.

The thick layer 93 is made of Ta₂O₅, and the layers 92 and 94 adjacent thereto are made of SiO₂. The thickness of the thick layer 93 is several times larger than the thickness of the higher refractive index layers and the lower refractive index layers that constitute the polarization dependency improvement part.

As will be seen from Figs. 39 and 43, the polarization dependency is improved whether the polarization dependency improvement part is arranged under or over the SWPF part and the LWPF part, and it should be understood that the position at which polarization dependency improvement part is arranged is not limited to between the SWPF part and the LWPF part.

### (Example 12)

In example 12, a plurality of LWPF parts are provided in order to widen the reflection bands.

Fig. 47 is a graph showing the band pass characteristics of an optical multilayer band pass filter according to example 12. Fig. 48 is a graph showing the band pass characteristics of the SWPF part, the LWPF part, and the polarization dependency improvement part in example 12. Fig. 49 is a cross sectional view showing the structure of the optical multilayer band pass filter according to example 12. Fig. 50 shows the film thickness and the material of each layer of the optical multilayer band pass filter according to example 12.

In Fig. 47, the solid curve A represents the transmission characteristics (Tp) with respect to the P-polarized light, the broken curve B represents the transmission characteristics (Ts) with respect to the S-polarized light, and the dot-and-dash curve C represents the average (Tmean) of the transmission characteristics with respect to the P-polarized light and the transmission characteristics with respect to the S-polarized light. In Fig. 48, the solid curve D represents the transmission characteristics (the average (Tmean) of the transmission characteristics with respect to the P-polarized light and the transmission characteristics with respect to the S-polarized light) of the SWPF part, the broken line E2 represents the transmission characteristics (the average (Tmean) of the transmission characteristics with respect to the P-polarized light and the transmission characteristics with respect to the S-polarized light) of a second LWPF part, the dot-and-dash curve E1 represents the transmission characteristics (the average (Tmean) of the transmission characteristics with respect to the P-polarized light and the transmission characteristics with respect to the S-polarized light) of a first LWPF part, and the broken curve F represents the transmission characteristics (Tmean) of the polarization dependency improvement part. The optical thicknesses (λ/4 = 1) presented in Fig. 50 are those in the case where the angle of incidence is 45 degrees and the wavelength λ of the subject light is 498 nm.

The optical multilayer band pass filter according to example 12 has a structure in which the SWPF part, a first thick layer, the polarization dependency improvement part, a second thick layer, the first LWPF part, and the second LWPF part are deposited in order from the substrate side to the air side. The first LWPF part forms a rise portion, and the second LWPF part forms a reflection band on the shorter wavelength side of the rise portion formed by the first LWPF part.

The SWPF part is composed of 50 layers, or layers 1 to 50. The thick layers are provided as the layers 51 and 72 on both sides of the polarization dependency improvement part. The polarization dependency improvement part is composed of 20 layers, or layers 52 to 71. The first LWPF part is composed of 46 layers, or layers 73 to 118. The second LWPF part is composed of 34 layers, or layers 119 to 152.

The SWPF part, the polarization dependency improvement part, the first LWPF part, and the second LWPF part have a structure in which a plurality of higher refractive index layers made of Ta₂O₅ as the first dielectric material and a plurality of lower refractive index layers made of SiO₂ as the second dielectric material are deposited alternately.

The thick layer 51 on the SWPF part side is made of Ta₂O₅, and the thick layer 72 on the first LWPF part side is made of SiO₂. The layers 50 and 52 adjacent to the thick layer 51 are made of SiO₂, and the layers 71 and 73 adjacent to the thick layer 72 are made of Ta₂O₅. The thickness of the thick layers is several times larger than the thickness of the higher refractive index layers and the lower refractive index layers that constitute the polarization dependency improvement part.

As will be seen from Fig. 47, characteristics with improved polarization dependency are obtained, and it should be understood that there may be adopted a structure in which a plurality of LWPF parts or SWPF parts are provided additionally to an LWPF part and an SWPF part that form a rise portion and a fall portion and a polarization dependency improvement part that improves the polarization dependency of them.

### INDUSTRIAL APPLICABILITY

As described above, the optical multilayer band pass filter according to the present invention is useful for applications in which low polarization dependency is required for light incident obliquely on it.

## Claims

1. An optical multilayer band pass filter **characterized by** comprising:
a substrate transparent to subject light;
an LWPF part provided only on one side of the substrate, which forms a rise portion relating to a rising transmittance with increasing wavelength and a reflection band on a shorter wavelength side in band pass characteristics;
an SWPF part provided on the one side of the substrate, which forms a fall portion relating to a decreasing transmittance with increasing wavelength and a reflection band on a longer wavelength side in the band pass characteristics; and
a polarization dependency improvement part provided on the one side of the substrate, which controls split-up between the P-wave and the S-wave occurring in the rise portion and the fall portion formed respectively by the LWPF part and the SWPF part when the subject light is incident obliquely at about 45 degrees, such that the characteristic curve with respect to the P-wave is shifted toward the characteristic curve with respect to the S-wave in order to narrow the pass-band with respect to the P-wave, such that the band pass filter has reduced polarization dependency in the rise portion and the fall portion at the boundaries of the pass band and the reflection bands, wherein
the LWPF part, the SWPF part, and the polarization dependency improvement part have a structure in which a plurality of higher refractive index layers made of a first dielectric material and a plurality of lower refractive index layers made of a second dielectric material having a refractive index lower than the first dielectric material are deposited alternately.

2. The optical multilayer band pass filter according to claim 1, **characterized in that** the polarization dependency improvement part is composed only of two materials.

3. The optical multilayer band pass filter according to claim 1, **characterized in that**
the polarization dependency improvement part, the LWPF part and the SWPF part have a common transmission band in band pass characteristics, and
the polarization dependency improvement part has, corresponding to the rise portion and the fall portion in the LWPF part and the SWPF part respectively, at least one of a rise portion, a fall portion, and a ripple portion in which the transmittance decreases partly, that reduces the split-up between the P-wave and the S-wave occurring in the rise portion and the fall portion formed respectively by the LWPF part and the SWPF part when the subject light is incident obliquely.

4. The optical multilayer band pass filter according to claim 1, **characterized by** further comprising a matching layer arranged on one or both sides of the polarization dependency improvement part, wherein the matching layer comprises one or both of a layer made of the first dielectric material and a layer made of the second dielectric material, the layer or layers comprising a thick layer having a thickness several times larger than the thickness of the higher refractive index layers and the lower refractive index layers that constitute the polarization dependency improvement part.

5. The optical multilayer band pass filter according to claim 1, **characterized in that** there is one or more polarization dependency improvement part arranged between the LWPF part and the SWPF part, or on the substrate side or the outer surface side of the LWPF part and the SWPF part.

6. The optical multilayer band pass filter according to claim 1, **characterized in that** an additional LWPF part or SWPF part that forms a reflection band in band pass characteristics in a wavelength range longer than or shorter than the reflection bands formed by the LWPF part or the SWPF part respectively is provided in addition to the LWPF part and the SWPF part.

## Patentansprüche

1. Optischer Mehrschicht-Bandpassfilter, **dadurch gekennzeichnet, dass** er aufweist:
ein Substrat, das Subjektlicht gegenüber transparent ist;
einen LWPF-Teil, der nur an einer Seite des Substrats vorhanden ist und der einen Anstiegsabschnitt, der sich auf eine ansteigende Lichtdurchlässigkeit bei zunehmender Wellenlänge bezieht, und ein Reflektionsband auf einer kürzeren Wellenlängenseite der Bandpass-Kenndaten bildet;
einen SWPF-Teil, der sich auf der einen Seite des Substrats befindet und der einen Abnahmeabschnitt, der sich auf eine abnehmende Lichtdurchlässigkeit bei zunehmender Wellenlänge bezieht, und ein Reflektionsband auf einer längeren Wellenlängenseite der Bandpass-Kenndaten bildet; und
einen Polarisationsabhängigkeitsverbesserungsteil, der sich auf der einen Seite des Substrats befindet und der eine Trennung von der P-Welle und der S-Welle, die in dem Anstiegsabschnitt bzw. dem Abnahmeabschnitt, die jeweils durch den LWPF-Teil und den SWPF-Teil gebildet werden, steuert, wenn das Subjektlicht bei circa 45 Grad schräg einfällt, so dass die Kennlinie bezüglich der P-Welle in Richtung der Kennlinie bezüglich der S-Welle verschoben wird, um das Passband bezüglich der P-Welle zu verengen, so dass der Bandpassfilter eine verringerte Polaritätsabhängigkeit in dem Anstiegsabschnitt und dem Abnahmeabschnitt an den Grenzen des Passbands und der Reflektionsbänder aufweist, wobei
der LWPF-Teil, der SWPF-Teil und der Polarisationsabhängigkeitsverbesserungsteil eine Struktur aufweisen, in der eine Mehrzahl an Schichten mit einem höheren Brechindex, die aus einem ersten dielektrischen Material bestehen, und eine Mehrzahl an Schichten mit einem niedrigeren Brechindex, die aus einem zweiten dielektrischen Material bestehen, das einen Brechindex aufweist, der niedriger ist als der des ersten dielektrischen Materials, alternierend angeordnet sind.

2. Optischer Mehrschicht-Bandpassfilter nach Anspruch 1, **dadurch gekennzeichnet, dass** der Polarisationsabhängigkeitsverbesserungsteil nur aus zwei Materialien besteht.

3. Optischer Mehrschicht-Bandpassfilter nach Anspruch 1, **dadurch gekennzeichnet, dass**
der Polarisationsabhängigkeitsverbesserungsteil, der LWPF-Teil und der SWPF-Teil ein gemeinsames Übertragungsband der Bandpass-Kenndaten aufweisen, und
der Polarisationsabhängigkeitsverbesserungsteil entsprechend dem Anstiegsabschnitt und dem Abnahmeabschnitt in dem LWPF-Teil bzw. dem SWPF-Teil einen Abnahmeabschnitt aufweist, und einen Restwelligkeitsabschnitt, bei dem sich die Durchlässigkeit teilweise verringert, der die Trennung zwischen der P-Welle und der S-Welle, die in dem Anstiegsabschnitt bzw. dem Abnahmeabschnitt stattfinden, die durch den LWPF-Teil und den SWPF-Teil gebildet werden, reduziert, wenn das Subjektlicht schräg einfällt.

4. Optischer Mehrschicht-Bandpassfilter nach Anspruch 1, **dadurch gekennzeichnet, dass** er ferner eine Anpassungsschicht aufweist, die an einer oder beiden Seiten des Polarisationsabhängigkeitsverbesserungsteils angeordnet ist, wobei die Anpassungsschicht eine oder beide von einer Schicht, die aus dem ersten dielektrischen Material besteht, und einer Schicht, die aus dem zweiten dielektrischen Material besteht, aufweist, wobei die Schicht oder die Schichten eine dicke Schicht aufweisen, die eine Dicke aufweist, die um ein Vielfaches größer ist als die Dicke der Schichten mit höherem Brechindex und der Schichten mit niedrigerem Brechindex, die den Polarisierungsabhängigkeitsverbesserungsteil darstellen.

5. Optischer Mehrschicht-Bandpassfilter nach Anspruch 1, **dadurch gekennzeichnet, dass** es einen oder mehrere Polarisierungsabhängigkeitsverbesserungsteile gibt, die zwischen dem LWPF-Teil und dem SWPF-Teil oder an der Substratseite oder der äußeren Oberflächenseite des LWPF-Teils und des SWPF-Teils angeordnet sind.

6. Optischer Mehrschicht-Bandpassfilter nach Anspruch 1, **dadurch gekennzeichnet, dass** ein zusätzlicher LWPF-Teil oder SWPF-Teil, der ein Reflektionsband der Bandpass-Kenndaten in einem Wellenlängenbereich bildet, der länger oder kürzer ist als die Reflektionsbänder, die durch den LWPF-Teil bzw. den SWPF-Teil gebildet werden, zusätzlich zu dem LWPF-Teil und dem SWPF-Teil vorhanden ist.

## Revendications

1. Filtre passe-bande multicouche optique **caractérisé en ce qu'**il comprend :
un substrat transparent à la lumière cible ;
une partie LWPF disposée uniquement sur un premier côté du substrat, qui forme une portion ascendante se rapportant à une transmittance d'élévation avec une longueur d'onde croissante et une bande de réflexion sur un côté de longueur d'onde plus courte dans les caractéristiques de passe-bande ;
une partie SWPF disposée sur le premier côté du substrat, qui forme une portion descendante se rapportant à une transmittance de diminution avec une longueur d'onde croissante et une bande de réflexion sur un côté de longueur d'onde plus longue dans les caractéristiques de passe-bande et
une partie d'amélioration de dépendance à la polarisation disposée sur le premier côté du substrat, qui commande la séparation entre l'onde P et l'onde S se produisant dans la portion ascendante et dans la portion descendante formées respectivement par la partie LWPF et la partie SWPF quand la lumière cible est incidente obliquement à environ 45 degrés, de telle sorte que la courbe caractéristique par rapport à l'onde P est décalée vers la courbe caractéristique par rapport à l'onde S afin de rétrécir la bande passante par rapport à l'onde P, de telle sorte que le filtre passe-bande a réduit la dépendance à la polarisation dans la portion ascendante et dans la portion descendante au niveau des frontières de la bande passante et des bandes de réflexion,
dans lequel la partie LWPF, la partie SWPF et la partie d'amélioration de la dépendance à la polarisation ont une structure dans laquelle une pluralité de couches à indice de réfraction plus élevé composées d'un premier matériau diélectrique et une pluralité de couches à indice de réfraction plus faible composées d'un second matériau diélectrique ayant un indice de réfraction inférieur au premier matériau diélectrique sont déposées en alternance.

2. Filtre passe-bande multicouche optique selon la revendication 1, **caractérisé en ce que** la partie d'amélioration de la dépendance à la polarisation se compose uniquement de deux matériaux.

3. Filtre passe-bande multicouche optique selon la revendication 1, **caractérisé en ce que**
la partie d'amélioration de la dépendance à la polarisation, la partie LWPF et la partie SWPF comportent une bande de transmission commune dans les caractéristiques de passe-bande, et
la partie d'amélioration de la dépendance à la polarisation comporte, en correspondance avec la portion ascendante et la portion descendante dans la partie LWPF et la partie SWPF respectivement, au moins une portion parmi une portion ascendante, une portion descendante et une portion ondulation dans laquelle la transmittance diminue partiellement, ce qui réduit la séparation entre l'onde P et l'onde W se produisant dans la portion ascendante et dans la portion descendante formées respectivement par la partie LWPF et la partir SWPF quand la lumière cible est obliquement incidente.

4. Filtre passe-bande multicouche optique selon la revendication 1, **caractérisé en ce qu'**il comprend en outre une couche d'association agencée sur un ou les deux côtés de la partie d'amélioration de la dépendance à la polarisation, dans lequel la couche d'association comprend une couche composée du premier matériau diélectrique et/ou une couche composée du second matériau diélectrique, la couche ou les couches comprenant une couche épaisse ayant une épaisseur plusieurs fois plus grande que l'épaisseur des couches à indice de réfraction plus élevé et des couches à indice de réfraction plus faible qui constituent la partie d'amélioration de la dépendance à la polarisation.

5. Filtre passe-bande multicouche optique selon la revendication 1, **caractérisé en ce qu'**il y a une ou plusieurs parties d'amélioration de la dépendance à la polarisation agencées entre la partie LWPF et la partie SWPF, ou sur le côté substrat ou le côté surface extérieure de la partie LWPF et de la partie SWPF.

6. Filtre passe-bande multicouche optique selon la revendication 1, **caractérisé en ce qu'**une partie LWPF ou partie SWPF supplémentaire qui forme une bande de réflexion dans les caractéristiques de passe-bande dans une plage de longueur d'onde plus longue ou plus courte que les bandes de réflexion formées par la partie LWPF ou la partie SWPF respectivement est prévue en plus de la partie LWPF et de la partie SWPF.
